# EUROPEAN PATENT APPLICATION

(11) **EP 4 529 276 A1**
(43) Date of publication of application: **26.03.2025**
(21) Application number: 22953683.4
(22) Date of filing: 05.08.2022
(51) Int. Cl.: H04W 36/30, H04W 40/22, H04W 88/04, H04W 24/08

(54) **WIRELESS COMMUNICATION METHOD, AND DEVICE**

(71) Applicant: GUANGDONG OPPO MOBILE TELECOMMUNICATIONS CORP., LTD., Dongguan, Guangdong 523860 (CN)
(72) Inventor: ZHANG, Boyuan, Dongguan, Guangdong 523860 (CN); LU, Qianxi, Dongguan, Guangdong 523860 (CN); LENG, Bingxue, Dongguan, Guangdong 523860 (CN)
(74) Representative: Ipside
(86) International application number: PCT/CN2022/110702
(87) International publication number: WO 2024/026883

(57) **Abstract**

Embodiments of the present disclosure provide a wireless communication method and device. A communication device (such as a network device or a serving layer-2 (L2) user equipment to network device (U2N) relay UE) configures for a remote UE at least one measurement event for switching between a first relay link and a second relay link, so that the remote UE can realize switching between relay links based on the configured measurement event. The wireless communication method includes receiving, by a remote UE, first information. The first information is used to configure at least one measurement event, and the at least one measurement event is for switching between a first relay link and a second relay link, and both the first relay link and the second relay link are for the remote UE to access a network through a relay UE.

## Description

### TECHNICAL FIELD

The embodiments of the present disclosure relate to the field of communications, and more specifically, to a wireless communication method and device.

### BACKGROUND

In the new radio (NR) system, switching of a remote user equipment (UE) between sidelink relay links (i.e., link for the remote UE to access a network through a relay UE) is introduced. How the remote UE reports a measurement result to enable the network device to determine whether to perform switching between sidelink relay links is a problem that needs to be solved.

### SUMMARY

The embodiments of the present disclosure provide a wireless communication method and device. where a communication device (such as a network device or a serving layer-2 (L2) user equipment to network device (U2N) relay UE) configures for a remote UE at least one measurement event for switching between a first relay link and a second relay link, so that the remote UE can report a measurement result based on the configured measurement event, and thus the network device can determine whether to perform switching between relay links based on the reported measurement result.

In a first aspect, a wireless communication method is provided. The method includes receiving, by a remote UE, first information. The first information is used to configure at least one measurement event, and the at least one measurement event is for switching between a first relay link and a second relay link, and both the first relay link and the second relay link are for the remote UE to access a network through a relay UE.

In a second aspect, a wireless communication method is provided. The method includes sending, by a communication device, first information. The first information is used to configure at least one measurement event, and the at least one measurement event is for switching between a first relay link and a second relay link, and both the first relay link and the second relay link are for a remote UE to access a network through a relay UE.

In a third aspect, a remote UE is provided, where the remote UE is configured to execute the method in the first aspect.

Specifically, the remote UE includes a functional module(s) configured to execute the method in the above-mentioned first aspect.

In a fourth aspect, a communication device is provided, where the communication device is configured to execute the method in the second aspect.

Specifically, the communication device includes a functional module(s) configured to execute the method in the above-mentioned second aspect.

In a fifth aspect, a remote UE is provided. The remote UE includes a processor and a memory. The memory is configured to store a computer program, and the processor is configured to invoke and run the computer program stored in the memory, to enable the remote UE to execute the method in the above-mentioned first aspect.

In a sixth aspect, a communication device is provided. The communication device includes a processor and a memory. The memory is configured to store a computer program, and the processor is configured to invoke and run the computer program stored in the memory, to enable the communication device to execute the method in the above-mentioned second aspect.

In a seventh aspect, a device is provided for implementing the method in any one of the first to second aspects above.

Specifically, the device includes a processor configured to invoke and run a computer program in a memory, to enable an apparatus equipped with the device to execute the method in any one of the first to second aspects described above.

In an eighth aspect, a computer-readable storage medium is provided. The storage medium is configured to store a computer program, where the computer program enables a computer to execute the method in any one of the first to second aspects above.

In a ninth aspect, a computer program product is provided. The computer program product includes computer program instructions, where the computer program instructions enable a computer to execute the method in any one of the first to second aspects above.

In a tenth aspect, a computer program is provided, where the computer program which, when executed on a computer, enables the computer to execute the method in any one of the first to second aspects above.

In the above technical solution, a communication device (such as a network device or a serving L2 U2N relay UE configures for a remote UE at least one measurement event for switching between a first relay link and a second relay link, so that the remote UE can report a measurement result based on the configured measurement event, and thus the network device can determine whether to perform switching between relay links based on the reported measurement result.

### BRIEF DESCRIPTION OF THE DRAWINGS

FIG. 1 is a schematic diagram of a communication system architecture to which embodiments of the present disclosure are applied.
FIG. 2 is a schematic diagram of another communication system architecture to which embodiments of the present disclosure are applied.
FIG. 3 is a schematic flow chart of a wireless communication method according to embodiments of the present disclosure.
FIG. 4 is a schematic block diagram of a remote user equipment (UE) according to embodiments of the present disclosure.
FIG. 5 is a schematic block diagram of a communication device according to embodiments of the present disclosure.
FIG. 6 is a schematic block diagram of another communication device according to embodiments of the present disclosure.
FIG. 7 is a schematic block diagram of a device according to embodiments of the present disclosure.
FIG. 8 is a schematic block diagram of a communication system according to embodiments of the present disclosure.

### DETAILED DESCRIPTION

The following will describe the technical solutions in the embodiments of the present disclosure in conjunction with the drawings in the embodiments of the present disclosure. Obviously, the described embodiments are part of the embodiments of the present disclosure, not all of the embodiments of the present disclosure. Based on the embodiments in the present disclosure, all other embodiments obtained by those skilled in the art without creative efforts are within the scope of protection of the present disclosure.

The technical solutions of the embodiments of the present disclosure can be applied to various communication systems, such as: a global system of mobile communication (GSM) system, a code division multiple access (CDMA) system, a wideband code division multiple access (WCDMA) system, general packet radio service (GPRS), a long term evolution (LTE) system, an advanced long term evolution (LTE-A) system, a new radio (NR) system, an evolved system of the NR system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area network (WLAN), internet of things (IoT), a wireless fidelity (WiFi) system, a fifth-generation (5G) communication system, a sixth-generation communication (6G) system or other communication systems, etc.

Generally speaking, traditional communication systems support a limited number of connections and are easy to implement. However, with the development of communication technology, mobile communication systems will not only support traditional communications, but will also support, for example, device to device (D2D) communication, machine to machine (M2M) communication, machine type communication (MTC), vehicle to vehicle (V2V) communication, sidelink communication, vehicle to everything (V2X) communication, etc. The embodiments of the present disclosure can also be applied to these communication systems.

In some embodiments, the communication system in the embodiments of the present disclosure can be applied to a carrier aggregation (CA) scenario, a dual connectivity (DC) scenario, a standalone (SA) scenario, or a non-standalone (NSA) scenario.

In some embodiments, the communication system in the embodiments of the present disclosure can be applied to an unlicensed spectrum, where the unlicensed spectrum can also be considered as a shared spectrum. Alternatively, the communication system in the embodiments of the present disclosure can also be applied to a licensed spectrum, where the licensed spectrum can also be considered as an unshared spectrum.

In some embodiments, the communication system in the embodiments of the present disclosure can be applied to an FR1 frequency band (having a corresponding frequency band range of 410 MHz to 7.125 GHz), and can also be applied to an FR2 frequency band (having a corresponding frequency band range of 24.25 GHz to 52.6 GHz), and can also be applied to new frequency bands such as high-frequency frequency band having a corresponding frequency band range of 52.6 GHz to 71 GHz or a corresponding frequency band range of 71 GHz to 114.25 GHz.

Various embodiments of the present disclosure are described in conjunction with a network device and a terminal device, where the terminal device may also be referred to as a user equipment (UE), an access terminal, a user unit, a user station, a mobile station, a mobile platform, a remote station, a remote UE, a mobile device, a user terminal, a terminal, a wireless communication device, a user agent, or a user device, etc.

The terminal device may be a station (ST) in a WLAN, a cellular phone, a cordless phone, a session initiation protocol (SIP) phone, a wireless local loop (WLL) station, a personal digital assistant (PDA) device, a handheld device with wireless communication function, a computing device or other processing device connected to a wireless modem, a vehicle-mounted device, a wearable device, a terminal device in a next-generation communication system such as an NR network, or a terminal device in a future evolved public land mobile network (PLMN) network, etc.

In the embodiments of the present disclosure, the terminal device can be deployed on land, including indoors or outdoors, handheld, wearable or vehicle-mounted; can also be deployed on water (such as ships, etc.); and can also be deployed in the air (for example, on airplanes, balloons, and satellites, etc.).

In the embodiment of the present disclosure, the terminal device may be a mobile phone, a pad, a computer with wireless transceiving function, a virtual reality (VR) terminal device, an augmented reality (AR) terminal device, a wireless terminal device in industrial control, a wireless terminal device in self driving, a wireless terminal device in remote medical, a wireless terminal device in a smart grid, a wireless terminal device in transportation safety, a wireless terminal device in a smart city or a wireless terminal device in a smart home, an in-vehicle communication device, a wireless communication chip/application specific integrated circuit (ASIC)/system on chip (SoC), etc.

As an example but not limitation, in the embodiments of the present disclosure, the terminal device may also be a wearable device. The wearable device may also be referred to as a wearable smart device, which is a general term for wearable devices that are intelligently designed and developed using wearable technology for daily wear, such as glasses, gloves, watches, clothing, and shoes. The wearable device is a portable device that is worn directly on the body or integrated into the user's clothes or accessories. The wearable device is not only a hardware device, but also can achieve powerful functions through software support, data interaction, and cloud interaction. The wearable smart device in a broad sense includes, for example, a smart watch or smart glasses with complete functions and large sizes and capable of realizing independently all or part of functions without relying on a smart phone, and for example, various types of smart bands and smart jewelries for physical monitoring, of which each is dedicated to application functions of a certain type and required to be used together with other devices such as a smart phone.

In the embodiments of the present disclosure, the network device may be a device for communicating with a mobile device. The network device may be an access point (AP) in WLAN, a base transceiver station (BTS) in GSM or CDMA, or a NodeB (NB) in WCDMA; or an evolutional base station (eNB or eNodeB), a relay station or access point, a vehicle-mounted device, or a wearable device in LTE; or a network device or a gNB or a transmission reception point (TRP) in an NR network; or a network device in a future evolved PLMN network or a network device in an NTN, etc.

As an example and not a limitation, in the embodiments of the present disclosure, the network device may be mobile, for example, the network device may be a mobile device. In some embodiments, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. In some embodiments, the network device may also be a base station set up in a location such as land or water.

In the embodiments of the present disclosure, the network device may provide services for a cell, and the terminal device may communicate with the network device through transmission resources (e.g., frequency domain resources, or spectrum resources) used by the cell. The cell may be a cell corresponding to a network device (e.g., a base station). The cell may belong to a macro base station or a base station corresponding to a small cell. The small cell here may include: a metro cell, a micro cell, a pico cell, a femto cell, etc. These small cells have the characteristics of small coverage and low transmission power, and are suitable for providing high-speed data transmission services.

It may be understood that, the terms "system" and "network" are often used interchangeably in this article. The term "and/or" herein only describes an association relationship between associated objects, which means that there can be three relationships. For example, *A* and/or *B* can mean A alone, both *A* and *B* exist, and *B* alone. In addition, the character "/" herein generally indicates that the associated objects are in an "or" relationship.

The terms used in the detailed description of the disclosure are merely intended for explaining embodiments of the disclosure rather than limiting the disclosure. The terms "first", "second", "third", "fourth", and the like used in the specification, the claims, and the accompany drawings of the disclosure are used to distinguish different objects rather than describe a particular order. In addition, the terms "include", "comprise", and "have" as well as variations thereof are intended to cover non-exclusive inclusion.

It may be understood that, "indication" referred to in the embodiments of the present disclosure may be a direct indication, may be an indirect indication, or may mean that there is an association relationship. For example, *A* indicates *B* may mean that *A* directly indicates *B,* for instance, *B* can be obtained according to *A;* may mean that A indirectly indicates *B,* for instance, *A* indicates *C,* and *B* can be obtained according to *C;* or may mean that that there is an association relationship between A and *B*.

In the elaboration of embodiments of the disclosure, the term "correspondence" may mean that there is a direct or indirect correspondence between the two, may mean that there is an association between the two, or may mean a relationship of indicating and being indicated or configuring and being configured, etc.

In embodiments of the disclosure, the "pre-defined" or "pre-configured" can be implemented by pre-saving a corresponding code or table in a device (for example, including the terminal device and the network device) or in other manners that can be used for indicating related information, and the disclosure is not limited in this regard. For example, the "pre-defined" may mean defined in a protocol.

In embodiments of the disclosure, the "protocol" may refer to a standard protocol in the communication field, which may be an evolution of an existing LTE protocol, NR protocol, Wi-Fi protocol, or a protocol related to other communication systems, and the disclosure is not limited in this regard.

In order for better understanding of technical solutions of the embodiments of the present disclosure, the technical solutions of the present disclosure will be described in detail below in connection with embodiments. The following related art as an optional scheme can be arbitrarily combined with the technical solutions of embodiments of the disclosure, which shall all belong to the protection scope of embodiments of the disclosure. Embodiments of the disclosure include at least some of the following.

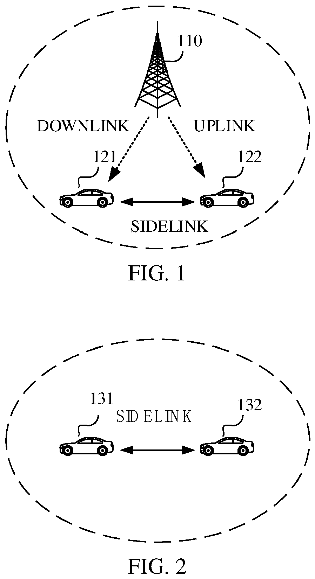

FIG. 1 is a schematic diagram of a communication system to which the embodiments of the present disclosure can be applied. Transmission resources for vehicle-mounted terminals (vehicle-mounted terminal 121 and vehicle-mounted terminal 122) are allocated by a base station 110, and the vehicle-mounted terminals can transmit data on a sidelink according to the resources allocated by the base station 110. Specifically, the base station 110 can allocate to the terminal resources for a single transmission, or can allocate to the terminal resources for a semi-static transmission.

FIG. 2 is a schematic diagram of another communication system to which the embodiments of the present disclosure can be applied. Vehicle-mounted terminal (vehicle-mounted terminal 131 and vehicle-mounted terminal 132) autonomously select transmission resources from resources of a sidelink for data transmission. Optionally, the vehicle-mounted terminal can randomly select transmission resources, or select transmission resources through sensing.

It may be noted that, an internet of vehicle (IoV) system adopts D2D direct communication, and thus has a relatively high spectrum efficiency and a relatively low transmission delay. 3GPP defines two transmission modes, namely: Mode 1 (sidelink resource allocation mode 1) and Mode 2 (sidelink resource allocation mode 2).

Mode 1: Transmission resources for the terminal are allocated by the base station, and the terminal can send data on the sidelink according to the resources allocated by the base station. The base station can allocate to the terminal resources for single transmission, or allocate to the terminal resources for semi-static transmission. As illustrated in FIG. 1, the terminal is within the coverage of the network, and the network allocates to the terminal transmission resources for sidelink transmission.

Mode 2: the terminal selects a resource from a resource pool for data transmission. As illustrated in FIG. 2, the terminal is located outside the coverage of a cell, and the terminal autonomously selects a transmission resource from a pre-configured resource pool for sidelink transmission; or the terminal autonomously selects a transmission resource from a resource pool configured by the network for sidelink transmission.

To facilitate understanding of the technical solutions of the embodiments of the present disclosure, the terms involved in the present disclosure are explained below.

Proximity-based services (ProSe): D2D communication, which is mainly for public safety services.

In ProSe, by configuring the position of a resource pool in the time domain, for example, by configuring the resource pool to be non-contiguous in the time domain, the terminal device can transmit/receive data non-continuously on the sidelink, thereby achieving power saving.

Vehicle-to-everything (V2X): the V2X system is mainly aimed at relatively high-speed vehicle-to-vehicle and vehicle-to-pedestrian communication services. In V2X, since the vehicle-mounted system has a continuous power supply, power efficiency is not the main issue, but the delay of data transmission is the main issue. Therefore, the system design requires the terminal device to perform transmission and reception continuously.

Wearable device (further enhancements to LTE device to device (FeD2D)): which corresponds to scenarios where wearable devices access a network through mobile phones, and is mainly aimed at scenarios with low mobile speed and low power access.

In FeD2D, the base station can configure a discontinuous reception (DRX) parameter(s) for a remote UE through a relay UE.

Multi-carrier: In LTE V2X, a multi-carrier mechanism is introduced. Specifically, the multi-carrier mechanism can support: packet segmentation, using multiple carriers to transmit packets to improve data transmission rate; packet duplication, a same data packet being duplicated into two duplications, and the two duplications being sent using two carriers to improve transmission reliability; and multi-carrier reception enhancement at the receiving end. Specifically, for packet duplication: V2X sidelink communication supports sidelink packet duplication, and sidelink packet duplication is executed at a packet data convergence protocol (PDCP) layer of the terminal device. For sidelink packet duplication for transmission, a PDCP protocol data unit (PDU) is duplicated at a PDCP entity. The duplicated PDCP PDUs of the same PDCP entity are submitted to two different radio link control (RLC) entities and associated with two different sidelink logical channels respectively. The duplicated PDCP PDUs of the same PDCP entity is only allowed to be transmitted on different sidelink carriers. The terminal device can activate or deactivate sidelink packet duplication based on (pre) configuration. Sidelink packet duplication is not applicable to transmissions with transmission profiles. ProSe per-packet reliability (PPPR) values of sidelink packet duplication can be (pre)configured via PPPR thresholds. For autonomous resource selection by the terminal device and scheduled resource allocation for the terminal device, the terminal device shall perform sidelink packet duplication for data with configured PPPR values until packet duplication is unconfigured for these PPPR values. For scheduled resource allocation, the terminal device can report the amount of data associated with one or more PPPR values and the destination to which the data belongs via a sidelink buffer status report (BSR). The mapping of PPPR values to logical channel groups can be configured by the eNB, and the PPPR value is reflected by an associated logical channel group identity (ID) included in the sidelink BSR. A list of one or more PPPR values can be reported via sidelink terminal information by a terminal device in a radio resource control (RRC) connected state.

NR-V2X, based on LTE V2X, is not limited to a broadcast scenario, and can be further applied in unicast and multicast scenarios.

Similar to LTE V2X, NR V2X also defines the above-mentioned two resource grant modes, namely Mode 1 (i.e., the above-mentioned first mode) and Mode 2 (i.e., the above-mentioned second mode). Further, the user may be in a mixed mode, that is, the user can use both Mode 1 and Mode 2 to acquire resources. The resource acquisition is indicated by sidelink grant, that is, the sidelink grant indicates the time-frequency position of corresponding physical sidelink control channel (PSCCH) and physical sidelink shared channel (PSSCH) resources.

Unlike LTE V2X, in addition to non-feedback hybrid automatic repeat reQuest (HARQ) retransmission initiated autonomously by the terminal device, in NR V2X feedback-based HARQ retransmission is introduced, which is not limited to unicast communication, and also can be applied in multicast communication. Similar to LTE V2X, in NR V2X, since the vehicle-mounted system has continuous power supply, power efficiency is not the main issue, but the delay of data transmission is the main issue, so the system design requires the terminal device to perform continuous transmission and reception.

Similar to LTE V2X, in NR V2X, since the on-board system has continuous power supply, power efficiency is not the main issue, but the latency of data transmission is the main issue, so the system design requires the terminal equipment to perform continuous transmission and reception.

In sidelink communication, the terminal device may trigger sidelink RRC reconfiguration process in the following scenarios:
releasing sidelink data bear in unicast communication;
establishing sidelink data bear in unicast communication;
modifying configuration related to sidelink data bear in unicast communication;
in the UE-to-network relay scenario, releasing a PC5 relay RLC channel between a layer-2 relay UE and a remote UE;
in the UE-to-network relay scenario, establishing a PC5 relay RLC channel between a layer 2 relay UE and a remote UE;
in the UE-to-network relay scenario, modifying configuration parameters related to a PC5 relay RLC channel between a layer-2 relay UE and the remote UE;
reconfiguring NR sidelink measurement reporting-related parameters;
reconfiguring sidelink channel state information (CSI) reference signal resources and CSI reporting delay boundaries;
reconfiguring peer UE sidelink DRX.

In order to facilitate a better understanding of the embodiments of the present disclosure, the UE-to-network relay involved in the present disclosure is explained.

In the NR system, for UE-to-network relay, the scenario is limited to that a remote UE under the same base station switches between a sidelink relay link (i.e., an link for the remote UE to access a network through a relay UE) and a Uu link (i.e., the link for the remote UE to directly access the network). In the NR evolution, mechanisms to enhance service continuity for single-hop layer-2 (L2) UE-to-network (U2N) relay are specified for the following scenarios, and the following four new scenarios are newly added:
Inter-gNB indirect-to-direct path switching (i.e., "remote UE <-> relay UE A <-> gNB X" to "remote UE <-> gNB Y");
Inter-gNB direct-to-indirect path switching (i.e., "remote UE <-> gNB X" to "remote UE <-> relay UE A <-> gNB Y");
Intra-gNB indirect-to-indirect path switching (i.e., "remote UE <-> relay UE A <-> gNB X" to "remote UE <-> relay UE B <-> gNB X");
Inter-gNB indirect-to-indirect path switching (i.e., "remote UE<-> relay UE A <-> gNB X" to "remote UE <-> relay UE B <-> gNB Y").

Measurement report events, for example, event X1, event X2, event Y1, and event Y2, are introduced for the remote UE to switch between the sidelink relay link (i.e., the link for the remote UE to access the network through the relay UE) and the Uu link (i.e., the link for the remote UE to directly access the network).

### Event X1

In event X1, a measurement result of a serving L2 U2N relay UE becomes worse than threshold1 and a measurement result of an NR Cell becomes better than threshold2.

An entering condition for event X1: both condition X1-1 and condition X1-2, as specified below, are fulfilled.

A leaving condition for event X1: condition X1-3 or condition X1-4, i.e. at least one of the two, as specified below, is fulfilled.
Inequality X1-1 (entering condition X1-1): *Mr + Hys < Thresh1*
Inequality X1-2 (entering condition X1-2): *Mn + Ofn + Ocn - Hys > Thresh2*
Inequality X1-3 (leaving condition X1-3): *Mr - Hys > Thresh1*
Inequality X1-4 (leaving condition X1-4): *Mn + Ofn + Ocn + Hys < Thresh2*

The variables in the formula are defined as follows:
*Mr* is the measurement result of the serving L2 U2N Relay UE, not taking into account any offsets.
*Mn* is the measurement result of the NR cell, not taking into account any offsets.
*Ofn* is the measurement object specific offset of the frequency of the NR cell.
*Ocn* is the cell specific offset of the NR cell, and set to zero if not configured for the NR cell.
*Hys* is the hysteresis parameter for event X1.
*Thresh1* is the threshold parameter for event X1 (i.e. *x1-Threshold1-Relay* as defined within *reportConfigNR* for event X1).
*Thresh2* is the threshold parameter for event X1 (i.e. *x1-Threshold2* as defined within reportConfigNR for event X1).
*Mr* is expressed in dBm.
*Mn* is expressed in dBm in case of reference signal received power (RSRP), or in dB in case of reference signal received quality (RSRQ) or reference signal signal to interference plus noise ratio (RS-SINR).
*Ofn, Ocn, Hys* are expressed in dB.
*Thresh1* is expressed in the same unit as *Mr.*
*Thresh2* is expressed in the same unit as *Mn.*

### Event X2

In event X2, the measurement result of the serving L2 U2N relay UE becomes worse than a threshold.

An entering condition for event X2: condition X2-1, as specified below, is fulfilled.

A leaving condition for event X2: condition X2-2, as specified below, is fulfilled.
Inequality X2-1 (entering condition): *Mr + Hys < Thresh*
Inequality X2-2 (leaving condition): *Mr - Hys > Thresh*

The variables in the formula are defined as follows:
*Mr* is the measurement result of the serving L2 U2N Relay UE, not taking into account any offsets.
*Hys* is the hysteresis parameter for event X2.
*Thresh* is the threshold parameter for event X2 (i.e. *x2-Threshold-Relay* as defined within *reportConfigNR* for event X1).
*Mr* is expressed in dBm.
*Hys* are expressed in dB.
*Thresh* is expressed in the same unit as Mr.

### Event Y1

In event Y1, a measurement result of a primary cell (PCell) becomes worse than threshold1 and a measurement result of a candidate L2 U2N Relay UE becomes better than threshold2.

An entering condition for event Y1: both condition Y1-1 and condition Y1-2, as specified below, are fulfilled.

A leaving condition for event Y1: condition Y1-3 or condition Y1-4, i.e. at least one of the two, as specified below, is fulfilled.
Inequality Y1-1 (entering condition Y1-1): *Mp + Hys < Thresh1*
Inequality Y1-2 (entering condition Y1-2): *Mr- Hys > Thresh2*
Inequality Y1-3 (leaving condition Y1-3): *Mp - Hys > Thresh1*
Inequality Y1-4 (leaving condition Y1-4): *Mr + Hys < Thresh2*

The variables in the formula are defined as follows:
*Mp* is the measurement result of the PCell, not taking into account any offsets.
*Mr* is the measurement result of the candidate L2 U2N Relay UE, not taking into account any offsets.
*Hys* is the hysteresis parameter for event Y1 (i.e. *hysteresis* as defined within *reportConfigInterRAT* for event Y1).
*Thresh1* is the threshold parameter for event Y1 (i.e. *y1-Threshold1* as defined within *reportConfigInterRAT* for this event).
*Thresh2* is the threshold parameter for event Y1 (i.e. *y1-Threshold2-Relay* as defined within *reportConfigInterRAT* for this even).
*Mp* is expressed in dBm in case of RSRP, or in dB in case of RSRQ and SINR.
*Mr* is expressed in dBm or dB, depending on the measurement quantity of the candidate L2 U2N Relay UE.
*Hys* are expressed in dB.
*Thresh1* is expressed in the same unit as Mp.
*Thresh2* is expressed in the same unit as Mr.

### Event Y2

A measurement result of a candidate L2 U2N Relay UE becomes better than threshold.

An entering condition for event Y2: condition Y2-1, as specified below, is fulfilled.

A leaving condition for event Y2: condition Y2-2, as specified below, is fulfilled.

Inequality Y2-1 (entering condition Y2-1): *Mr- Hys > Thresh2.*

Inequality Y2-2 (leaving condition Y2-2): *Mr + Hys < Thresh2.*

*Mr* is the measurement result of the candidate L2 U2N Relay UE, not taking into account any offsets.

*Hys* is the hysteresis parameter for event Y2 (i.e. *hysteresis* as defined within *reportConfigInterRAT* for event Y2).

*Thresh* is the threshold parameter for event Y2 (i.e. y2-Threshold-Relay as defined within *reportConfigInterRAT* for event Y2).

*Mr* is expressed in dBm or dB, depending on the measurement quantity of the candidate L2 U2N Relay UE.

*Hys* are expressed in dB.

*Thresh* is expressed in the same unit as Mr.

Based on the switching of the remote UE between sidelink relay links (i.e., the link for the remote UE to access the network through the relay UE) introduced in the NR evolution, in the present disclosure, a new measurement event is designed, so that the remote UE can report a measurement result based on the configured measurement event, and thus the network device can determine whether to perform switching between relay links based on the reported measurement result.

The technical solutions of the present disclosure are described in detail below through specific embodiments.

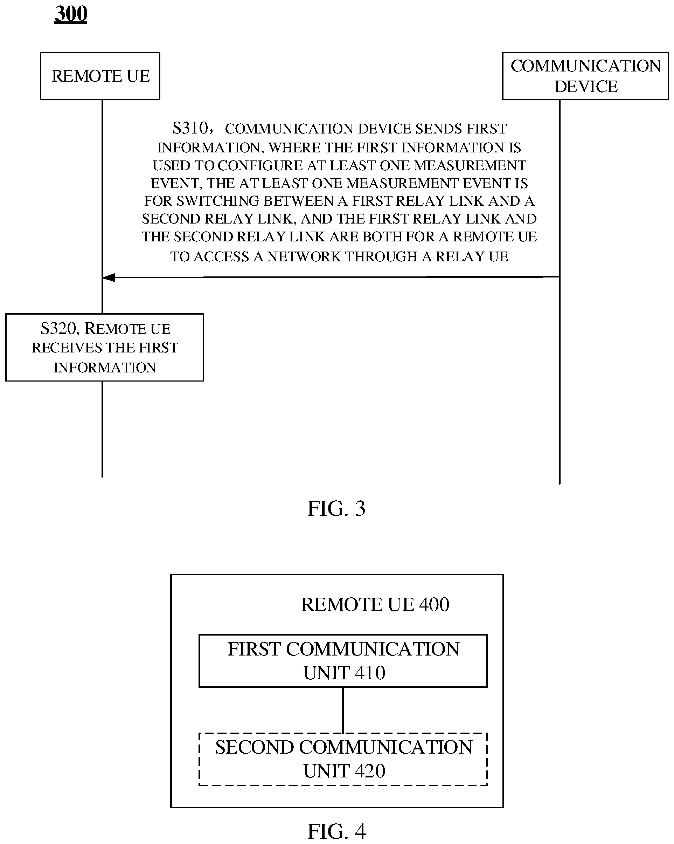

FIG. 3 is a schematic flow chart of a wireless communication method according to embodiments of the present disclosure. As illustrated in FIG. 3, the wireless communication method 300 may include at least part of the following contents.

S310, a communication device sends first information, where the first information is used to configure at least one measurement event, the at least one measurement event is for switching between a first relay link and a second relay link, and the first relay link and the second relay link are both for a remote UE to access a network through a relay UE.

S320, the remote UE receives the first information.

In the embodiment of the present disclosure, the remote UE can report a measurement result based on the at least one measurement event, and thus the network device can determine whether to perform switching between relay links based on the reported measurement result.

For example, in the case where some or all of the at least one measurement event trigger measurement result reporting, the remote UE can report a measurement result to the network device, and the network device can determine whether to perform switching between the first relay link (such as a source relay link) and the second relay link (such as a target relay link) based on the measurement result.

In some embodiments, the first information may include an entering condition and/or a leaving condition for the at least one measurement event. That is, the communication device configures the at least one measurement event by carrying the entering condition and/or the leaving condition for the at least one measurement event in the first information. In other words, the remote UE can determine the at least one measurement event configured by the network device by obtaining the entering condition and/or the leaving condition for the at least one measurement event.

It may be noted that, for a certain measurement event, the remote UE reports a measurement result when an entering condition is fulfilled, and does not perform measurement result reporting or does not report a measurement result when a leaving condition is fulfilled.

In some embodiments, the measurement result corresponding to the at least one measurement event may include but is not limited to at least one of: RSRP, RSRQ, or SINR.

In some embodiments, the switching between the first relay link and the second relay link is indirect-to-indirect path switching, that is, the remote UE switches between indirect paths. In the indirect path, the remote UE accesses a network through a relay UE. For example, it may be intra-gNB indirect-to-indirect path switching (for example, "remote UE <-> relay UE A <-> gNB X" to "remote UE <-> relay UE B <-> gNB X"). For another example, it may be inter-gNB indirect-to-indirect path switching (for example, "remote UE <-> relay UE A <-> gNB X" to "remote UE <-> relay UE B <-> gNB Y") .

In some embodiments, the communication device may be a network device or a serving L2 U2N relay UE. That is, the at least one measurement event may be configured by the network device, or the at least one measurement event may be configured by the serving L2 U2N relay UE. For example, in the case where the at least one measurement event is configured by the network device, the first information may be forwarded to the remote UE by the serving L2 U2N relay UE.

In some embodiments, in the case where the communication device is the network device, the first information may be carried in at least one of: RRC signaling, downlink control information (DCI), or a system broadcast message.

For example, in the case where the first information is carried in RRC signaling, the first information may be one or more information fields in the RRC signaling (which may be a newly designed information field or an existing information field may be multiplexed), or the first information may be one or more fields in an information field in the RRC signaling (which may be a newly designed field or an existing field is multiplexed).

For example, in the case where the first information is carried in DCI, the first information may be one or more information fields in the DCI (which may be a newly designed information field or an existing information field may be multiplexed), or the first information may be one or more fields in an information field in the DCI (which may be a newly designed field or an existing field may be multiplexed).

For example, in the case where the first information is carried in a system broadcast message, the first information may be one or more information fields in the system broadcast message (which may be a newly designed information field or an existing information field may be multiplexed), or the first information may be one or more fields in an information field in the system broadcast message (which may be a newly designed field or an existing field may be multiplexed).

In some embodiments, in the case where the communication device is the serving L2 U2N relay UE, the first information may be carried in at least one of: a discovery message, sidelink control information (SCI), a sidelink medium access control control element (SL MAC CE), or a PC5-RRC message.

For example, in the case where the first information is carried in a discovery message, the first information may be one or more information fields in the discovery message (which may be a newly designed information field or an existing information field may be multiplexed), or the first information may be one or more fields in an information field in the discovery message (which may be a newly designed field or an existing field may be multiplexed).

For example, in the case where the first information is carried in SCI, the first information may be one or more information fields in the SCI (which may be a newly designed information field or an existing information field may be multiplexed), or the first information may be one or more fields in an information field in the SCI (which may be a newly designed field or an existing field may be multiplexed).

For example, in the case where the first information is carried in an SL MAC CE, the first information may be one or more information fields in the SL MAC CE (which may be a newly designed information field or an existing information field may be multiplexed), or the first information may be one or more fields in an information field in the SL MAC CE (which may be a newly designed field or an existing field may be multiplexed).

For example, in the case where the first information is carried in a PC5-RRC message, the first information may be one or more information fields in the PC5-RRC message (which may be a newly designed information field or an existing information field may be multiplexed), or the first information may be one or more fields in an information field in the PC5-RRC message (which may be a newly designed field or an existing field may be multiplexed).

In some embodiments, the at least one measurement event includes a first measurement event. In the first measurement event, a link measurement value between the remote UE and the serving L2 U2N relay is greater than or equal to a first threshold, and/or a link measurement value between the serving L2 U2N relay UE and the network device is greater than or equal to a second threshold.

Specifically, in the first measurement event, the link measurement value between the remote UE and the serving L2 U2N relay UE is greater than or equal to the first threshold, and/or the link measurement value between the serving L2 U2N relay UE and the network device is greater than or equal to the second threshold. In other words, when an entering condition for the first measurement event is fulfilled, the link measurement value between the remote UE and the serving L2 U2N relay UE is greater than or equal to the first threshold, and/or the link measurement value between the serving L2 U2N relay UE and the network device is greater than or equal to the second threshold.

In some embodiments, the entering condition for the first measurement event is that the link measurement value between the remote UE and the serving L2 U2N relay UE is greater than or equal to the first threshold, or the entering condition for the first measurement event is that a value obtained by subtracting a hysteresis value from the link measurement value between the remote UE and the serving L2 U2N relay UE is greater than or equal to the first threshold; and/or, a leaving condition for the first measurement event is that the link measurement value between the remote UE and the serving L2 U2N relay UE is less than the first threshold, or the leaving condition for the first measurement event is that a value obtained by adding the hysteresis value to the link measurement value between the remote UE and the serving L2 U2N relay UE is less than the first threshold.

In some embodiments, when the entering condition for the first measurement event is fulfilled, the remote UE reports a first measurement result, where the first measurement result is used to determine whether to perform switching between the first relay link and the second relay link. Further, the network device can determine whether to perform switching between the first relay link (such as the source relay link) and the second relay link (such as the target relay link) based on the reported first measurement result. For example, when the first measurement result reported by the remote UE meets a switching condition, the network device determines to switch a relay link to which the remote UE belongs from the first relay link (such as the source relay link) to the second relay link (such as the target relay link); when the first measurement result reported by the remote UE does not meet the switching condition, the network device determines not to perform switching for the relay link to which the remote UE belongs.

Optionally, the remote UE can obtain the first measurement result through measurement. For example, the first measurement result may include but is not limited to at least one of: RSRP, RSRQ, or SINR.

In some embodiments, when the leaving condition for the first measurement event is fulfilled, the remote UE does not perform measurement result reporting or does not report the measurement result.

In some embodiments, the entering condition for the first measurement event is that the link measurement value between the serving L2 U2N relay UE and the network device is greater than or equal to the second threshold, or the entering condition for the first measurement event is that a value obtained by subtracting the hysteresis value from the link measurement value between the serving L2 U2N relay UE and the network device is greater than or equal to the second threshold; and/or, the leaving condition for the first measurement event is that the link measurement value between the serving L2 U2N relay UE and the network device is less than the second threshold, or the leaving condition for the first measurement event is that a value obtained by adding the hysteresis value to the link measurement value between the serving L2 U2N relay UE and the network device is less than the second threshold.

In some embodiments, the first threshold and/or the second threshold are configured by the network device via RRC signaling, or the first threshold and/or the second threshold are configured by the network device via a system broadcast message. Specifically, in the case where the remote UE is within the network coverage and the remote UE is in an RRC idle state or an RRC deactivated state, the network device can send the first threshold and/or the second threshold to the remote UE via a system broadcast message. In the case where the remote UE is within the network coverage and the remote UE is in an RRC connected state, the network device can send the first threshold and/or the second threshold to the remote UE via RRC dedicated signaling.

In some embodiments, the first threshold and/or the second threshold are configured by the serving L2 U2N relay UE via a discovery message, or the first threshold and/or the second threshold are configured by the serving L2 U2N relay UE via a PC5-RRC message, or the first threshold and/or the second threshold are configured by the serving L2 U2N relay UE via a forwarded system broadcast message.

In some embodiments, the first measurement event is a measurement performed by the remote UE according to a configured NR measurement object (measObjectNR), where the measurement object may be the current serving L2 U2N relay UE.

In some embodiments, the at least one measurement event includes a second measurement event. In the second measurement event, a link measurement value between the remote UE and the serving L2 U2N relay UE is less than a third threshold, and/or a link measurement value between the serving L2 U2N relay UE and the network device is less than a fourth threshold.

Specifically, in the second measurement event, the link measurement value between the remote UE and the serving L2 U2N relay UE is less than the third threshold, and/or the link measurement value between the serving L2 U2N relay UE and the network device is less than the fourth threshold. In other words, when an entering condition for the second measurement event is fulfilled, the link measurement value between the remote UE and the serving L2 U2N relay UE is less than the third threshold, and/or the link measurement value between the serving L2 U2N relay UE and the network device is less than the fourth threshold.

In some embodiments, the entering condition for the second measurement event is that the link measurement value between the remote UE and the serving L2 U2N relay UE is less than the third threshold, or the entering condition for the second measurement event is that a value obtained by adding a hysteresis value to the link measurement value between the remote UE and the serving L2 U2N relay UE is less than the third threshold; and/or, a leaving condition for the second measurement event is that the link measurement value between the remote UE and the serving L2 U2N relay UE is greater than or equal to the third threshold, or the leaving condition for the second measurement event is that a value obtained by subtracting the hysteresis value from the link measurement value between the remote UE and the serving L2 U2N relay UE is greater than or equal to the third threshold.

In some embodiments, the entering condition for the second measurement event is that the link measurement value between the serving L2 U2N relay UE and the network device is less than the fourth threshold, or the entering condition for the second measurement event is that a value obtained by adding the hysteresis value to the link measurement value between the serving L2 U2N relay UE and the network device is less than the fourth threshold; and/or, the leaving condition for the second measurement event is that the link measurement value between the serving L2 U2N relay UE and the network device is greater than or equal to the fourth threshold, or the leaving condition for the second measurement event is that a value obtained by subtracting the hysteresis value from the link measurement value between the serving L2 U2N relay UE and the network device is greater than or equal to the fourth threshold.

In some embodiments, the third threshold and/or the fourth threshold are configured by the network device via RRC signaling, or the third threshold and/or the fourth threshold are configured by the network device via a system broadcast message. Specifically, in the case where the remote UE is within the network coverage and the remote UE is in an RRC idle state or an RRC deactivated state, the network device can send the third threshold and/or the fourth threshold to the remote UE via a system broadcast message. In the case where the remote UE is within the network coverage and the remote UE is in an RRC connected state, the network device can send the third threshold and/or the fourth threshold to the remote UE via RRC dedicated signaling.

In some embodiments, the third threshold and/or the fourth threshold are configured by the serving L2 U2N relay UE via a discovery message, or the third threshold and/or the fourth threshold are configured by the serving L2 U2N relay UE via a PC5-RRC message, or the third threshold and/or the fourth threshold are configured by the serving L2 U2N relay UE via a forwarded system broadcast message.

In some embodiments, the second measurement event is a measurement performed by the remote UE according to a configured NR measurement object (measObjectNR), where the measurement object may be the current serving L2 U2N relay UE.

In some embodiments, when the entering condition for the second measurement event is fulfilled, the remote UE reports a second measurement result, where the second measurement result is used to determine whether to perform switching between the first relay link and the second relay link. Thus, the network device can determine whether to perform switching between the first relay link (such as the source relay link) and the second relay link (such as the target relay link) based on the second measurement result reported by the remote UE. For example, when the second measurement result reported by the remote UE meets a switching condition, the network device determines to switch the relay link to which the remote UE belongs from the first relay link (such as the source relay link) to the second relay link (such as the target relay link); when the second measurement result reported by the remote UE does not meet the switching condition, the network device determines not to perform switching for the relay link to which the remote UE belongs.

Optionally, the remote UE can obtain the second measurement result through measurement. For example, the second measurement result may include but is not limited to at least one of: RSRP, RSRQ, or SINR.

In some embodiments, when the leaving condition for the second measurement event is fulfilled, the remote UE does not perform measurement result reporting or does not report the measurement result.

In some embodiments, the at least one measurement event includes a third measurement event. In the third measurement event, a link measurement value between the remote UE and a candidate L2 U2N relay UE is greater than or equal to a fifth threshold, and/or a link measurement value between the candidate L2 U2N relay UE and the network device is greater than or equal to a sixth threshold.

Specifically, in the third measurement event, the link measurement value between the remote UE and the candidate L2 U2N relay UE is greater than or equal to the fifth threshold, and/or the link measurement value between the candidate L2 U2N relay UE and the network device is greater than or equal to the sixth threshold. In other words, when an entering condition for the third measurement event is fulfilled, the link measurement value between the remote UE and the candidate L2 U2N relay UE is greater than or equal to the fifth threshold, and/or the link measurement value between the candidate L2 U2N relay UE and the network device is greater than or equal to the sixth threshold.

In some embodiments, the entering condition for the third measurement event is that a value obtained by adding a preset offset to the link measurement value between the remote UE and the candidate L2 U2N relay UE is greater than or equal to the fifth threshold, or the entering condition for the third measurement event is that a value obtained by subtracting a hysteresis value from a sum of the preset offset and the link measurement value between the remote UE and the candidate L2 U2N relay UE is greater than or equal to the fifth threshold; and/or, a leaving condition for the third measurement event is that the value obtained by adding the preset offset to the link measurement value between the remote UE and the candidate L2 U2N relay UE is less than the fifth threshold, or the leaving condition for the third measurement event is that a value obtained by adding the preset offset and the hysteresis value to the link measurement value between the remote UE and the candidate L2 U2N relay UE is less than the fifth threshold.

In some embodiments, the entering condition for the third measurement event is that the link measurement value between the candidate L2 U2N relay UE and the network device is greater than or equal to the sixth threshold, or the entering condition for the third measurement event is that a value obtained by subtracting the hysteresis value from the link measurement value between the candidate L2 U2N relay UE and the network device is greater than or equal to the sixth threshold; and/or, the leaving condition for the third measurement event is that the link measurement value between the candidate L2 U2N relay UE and the network device is less than the sixth threshold, or the leaving condition for the third measurement event is that the value obtained by adding the hysteresis value to the link measurement value between the candidate L2 U2N relay UE and the network device is less than the sixth threshold.

In some embodiments, the fifth threshold and/or the sixth threshold are configured by the network device via RRC signaling, or the fifth threshold and/or the sixth threshold are configured by the network device via a system broadcast message. Specifically, in the case where the remote UE is within the network coverage and the remote UE is in an RRC idle state or an RRC deactivated state, the network device can send the fifth threshold and/or the sixth threshold to the remote UE via a system broadcast message. In the case where the remote UE is within the network coverage and the remote UE is in an RRC connected state, the network device can send the fifth threshold and/or the sixth threshold to the remote UE via RRC dedicated signaling.

In some embodiments, the fifth threshold and/or the sixth threshold are configured by the serving L2 U2N relay UE via a discovery message, or the fifth threshold and/or the sixth threshold are configured by the serving L2 U2N relay UE via a PC5-RRC message, or the fifth threshold and/or the sixth threshold are configured by the serving L2 U2N relay UE via a forwarded system broadcast message.

In some embodiments, the third measurement event is a measurement performed by the remote UE according to a configured NR measurement object (measObjectNR), where the measurement object may be the current serving L2 U2N relay UE and the candidate L2 U2N relay UE.

In some embodiments, when the entering condition for the third measurement event is fulfilled, the remote UE reports a third measurement result, where the third measurement result is used to determine whether to perform switching between the first relay link and the second relay link. Further, the network device can determine whether to perform switching between the first relay link (such as the source relay link) and the second relay link (such as the target relay link) based on the third measurement result reported by the remote UE. For example, when the third measurement result reported by the remote UE meets a switching condition, the network device determines to switch the relay link to which the remote UE belongs from the first relay link (such as the source relay link) to the second relay link (such as the target relay link); when the third measurement result reported by the remote UE does not meet the switching condition, the network device determines not to perform switching for the relay link to which the remote UE belongs.

Optionally, the remote UE can obtain the third measurement result through measurement. For example, the third measurement result may include but is not limited to at least one of: RSRP, RSRQ, or SINR.

In some embodiments, when the leaving condition for the third measurement event is fulfilled, the remote UE does not perform measurement result reporting or does not report the measurement result.

In some embodiments, the at least one measurement event includes a fourth measurement event. In the fourth measurement event, a sidelink measurement value measured for the candidate L2 U2N relay UE is higher than a sidelink measurement value measured for the serving L2 U2N relay UE by a preset offset, and/or a link measurement value between the candidate L2 U2N relay UE and the network device is higher than a link measurement value between the serving L2 U2N relay UE and the network device by the preset offset.

Specifically, in the fourth measurement event, the sidelink measurement value measured for the candidate L2 U2N relay UE is higher than the sidelink measurement value measured for the serving L2 U2N relay UE by the preset offset, and/or the link measurement value between the candidate L2 U2N relay UE and the network device is higher than the link measurement value between the serving L2 U2N relay UE and the network device by the preset offset. In other words, when an entering condition for the fourth measurement event is fulfilled, the sidelink measurement value measured for the candidate L2 U2N relay UE is higher than the sidelink measurement value measured for the serving L2 U2N relay UE by the preset offset, and/or the link measurement value between the candidate L2 U2N relay UE and the network device is higher than the link measurement value between the serving L2 U2N relay UE and the network device by the preset offset.

In some embodiments, the entering condition for the fourth measurement event is that a value obtained by adding the preset offset to the sidelink measurement value measured for the candidate L2 U2N relay UE is greater than or equal to a value obtained by adding the preset offset and an offset corresponding to a current measurement object to the sidelink measurement value measured for the serving L2 U2N relay UE, or the entering condition for the fourth measurement event is that a value obtained by subtracting a hysteresis value from a sum of the preset offset and the sidelink measurement value measured for the candidate L2 U2N relay UE is greater than or equal to the value obtained by adding the preset offset and the offset corresponding to the current measurement object to the sidelink measurement value measured for the serving L2 U2N relay UE; and/or, a leaving condition for the fourth measurement event is that the value obtained by adding the preset offset to the sidelink measurement value measured for the candidate L2 U2N relay UE is less than the value obtained by adding the preset offset and the offset corresponding to the current measurement object to the sidelink measurement value measured for the serving L2 U2N relay UE, or the leaving condition for the fourth measurement event is that a value obtained by adding the preset offset and the hysteresis value to the sidelink measurement value measured for the candidate L2 U2N relay UE is less than the value obtained by adding the preset offset and the offset corresponding to the current measurement object to the sidelink measurement value measured for the serving L2 U2N relay UE.

In some embodiments, the entering condition for the fourth measurement event is that a value obtained by adding the preset offset to the link measurement value between the candidate L2 U2N relay UE and the network device is greater than or equal to the value obtained by adding the preset offset and the offset corresponding to the current measurement object to the link measurement value between the serving L2 U2N relay UE and the network device, or the entering condition for the fourth measurement event is that a value obtained by subtracting a hysteresis value from a sum of the preset offset and the link measurement value between the candidate L2 U2N relay UE and the network device is greater than or equal to the value obtained by adding the preset offset and the offset corresponding to the current measurement object to the link measurement value between the candidate L2 U2N relay UE and the network device; and/or, a leaving condition for the fourth measurement event is that the value obtained by adding the preset offset to the link measurement value between the candidate L2 U2N relay UE and the network device is less than the value obtained by adding the preset offset and the offset corresponding to the current measurement object to the link measurement value between the serving L2 U2N relay UE and the network device, or the leaving condition for the fourth measurement event is that a value obtained by adding the preset offset and the hysteresis value to the link measurement value between the candidate L2 U2N relay UE and the network device is less than the value obtained by adding the preset offset and the offset corresponding to the current measurement object to the link measurement value between the serving L2 U2N relay UE and the network device.

In some embodiments, the fourth measurement event is a measurement performed by the remote UE according to a configured NR measurement object (measObjectNR), where the measurement object may be the current serving L2 U2N relay UE and the candidate L2 U2N relay UE.

In some embodiments, when the entering condition for the fourth measurement event is fulfilled, the remote UE reports a fourth measurement result, where the fourth measurement result is used to determine whether to perform switching between the first relay link and the second relay link. Further, the network device can determine whether to perform switching between the first relay link (such as the source relay link) and the second relay link (such as the target relay link) based on the fourth measurement result reported by the remote UE. For example, when the fourth measurement result reported by the remote UE meets a switching condition, the network device determines to switch the relay link to which the remote UE belongs from the first relay link (such as the source relay link) to the second relay link (such as the target relay link); when the fourth measurement result reported by the remote UE does not meet the switching condition, the network device determines not to perform switching for the relay link to which the remote UE belongs.

Optionally, the remote UE can obtain the fourth measurement result through measurement. For example, the fourth measurement result may include but is not limited to at least one of: RSRP, RSRQ, or SINR.

In some embodiments, when the leaving condition for the fourth measurement event is fulfilled, the remote UE does not perform measurement result reporting or does not report the measurement result.

In some embodiments, the at least one measurement event includes a fifth measurement event. In the fifth measurement event, a link measurement value between the remote UE and the serving L2 U2N relay UE is less than a seventh threshold and a link measurement value between the remote UE and the candidate L2 U2N relay UE is greater than or equal to an eighth threshold, and/or, a link measurement value between the serving L2 U2N relay UE and the network device is less than a ninth threshold and a link measurement value between the candidate L2 U2N relay UE and the network device is greater than or equal to a tenth threshold.

Specifically, in the fifth measurement event, the link measurement value between the remote UE and the serving L2 U2N relay UE is less than the seventh threshold and the link measurement value between the remote UE and the candidate L2 U2N relay UE is greater than or equal to the eighth threshold, and/or, the link measurement value between the serving L2 U2N relay UE and the network device is less than the ninth threshold and the link measurement value between the candidate L2 U2N relay UE and the network device is greater than or equal to the tenth threshold. In other words, when an entering condition for the fifth measurement event is met, the link measurement value between the remote UE and the serving L2 U2N relay UE is less than the seventh threshold and the link measurement value between the remote UE and the candidate L2 U2N relay UE is greater than or equal to the eighth threshold, and/or, the link measurement value between the serving L2 U2N relay UE and the network device is less than the ninth threshold and the link measurement value between the candidate L2 U2N relay UE and the network device is greater than or equal to the tenth threshold.

In some embodiments, the entering condition for the fifth measurement event is that the link measurement value between the remote UE and the serving L2 U2N relay UE is less than the seventh threshold, or, the entering condition for the fifth measurement event is that a value obtained by adding a hysteresis value to the link measurement value between the remote UE and the serving L2 U2N relay UE is less than the seventh threshold, or, the entering condition for the fifth measurement event is that a value obtained by adding a preset offset to the link measurement value between the remote UE and the candidate L2 U2N relay UE is greater than or equal to the eighth threshold, or, the entering condition for the fifth measurement event is that a value obtained by subtracting the hysteresis value from a sum of the preset offset and the link measurement value between the remote UE and the candidate L2 U2N relay UE is greater than or equal to the eighth threshold; and/or, a leaving condition for the fifth measurement event is that the link measurement value between the remote UE and the serving L2 U2N relay UE is greater than or equal to the seventh threshold, or, the leaving condition for the fifth measurement event is that a value obtained by subtracting the hysteresis value from the link measurement value between the remote UE and the serving L2 U2N relay UE is greater than or equal to the seventh threshold, or, the leaving condition for the fifth measurement event is that a value obtained by adding the preset offset to the link measurement value between the remote UE and the candidate L2 U2N relay UE is less than the eighth threshold, or, the leaving condition for the fifth measurement event is that a value obtained by adding the preset offset and the hysteresis value to the link measurement value between the remote UE and the candidate L2 U2N relay UE is less than the eighth threshold.

In some embodiments, the entering condition for the fifth measurement event is that a value obtained by adding the hysteresis value to the link measurement value between the serving L2 U2N relay UE and the network device is less than the ninth threshold, or the entering condition for the fifth measurement event is that the value obtained by subtracting the hysteresis value from a sum of the preset offset and the link measurement value between the candidate L2 U2N relay UE and the network device is greater than or equal to the tenth threshold; and/or, the leaving condition for the fifth measurement event is that a value obtained by subtracting the hysteresis value from the link measurement value between the serving L2 U2N relay UE and the network device is less than the ninth threshold, or the leaving condition for the fifth measurement event is that a value obtained by subtracting the preset offset from a sum of the hysteresis value and the link measurement value between the candidate L2 U2N relay UE and the network device is less than the tenth threshold.

In some embodiments, at least one of the seventh threshold, the eighth threshold, the ninth threshold, or the tenth threshold is configured by the network device via RRC signaling, or at least one of the seventh threshold, the eighth threshold, the ninth threshold, or the tenth threshold is configured by the network device via a system broadcast message. Specifically, in the case where the remote UE is within the network coverage and the remote UE is in an RRC idle state or an RRC deactivated state, the network device can send at least one of the seventh threshold, the eighth threshold, the ninth threshold, or the tenth threshold to the remote UE via a system broadcast message. In the case where the remote UE is within the network coverage and the remote UE is in an RRC connected state, the network device can send at least one of the seventh threshold, the eighth threshold, the ninth threshold, or the tenth threshold to the remote UE via RRC dedicated signaling.

In some embodiments, at least one of the seventh threshold, the eighth threshold, the ninth threshold, or the tenth threshold is configured by the serving L2 U2N relay UE via a discovery message, or, at least one of the seventh threshold, the eighth threshold, the ninth threshold, or the tenth threshold is configured by the serving L2 U2N relay UE via a PC5-RRC message, or, at least one of the seventh threshold, the eighth threshold, the ninth threshold, or the tenth threshold is configured by the serving L2 U2N relay UE via a forwarded system broadcast message.

In some embodiments, the fifth measurement event is a measurement performed by the remote UE according to a configured NR measurement object (measObjectNR), where the measurement object may be the current serving L2 U2N relay UE and the candidate L2 U2N relay UE.

In some embodiments, when the entering condition for the fifth measurement event is fulfilled, the remote UE reports a fifth measurement result, where the fifth measurement result is used to determine whether to perform switching between the first relay link and the second relay link. Further, the network device can determine whether to perform switching between the first relay link (such as the source relay link) and the second relay link (such as the target relay link) based on the fifth measurement result reported by the remote UE. For example, when the fifth measurement result reported by the remote UE meets a switching condition, the network device determines to switch the relay link to which the remote UE belongs from the first relay link (such as the source relay link) to the second relay link (such as the target relay link); when the fifth measurement result reported by the remote UE does not meet the switching condition, the network device determines not to perform switching for the relay link to which the remote UE belongs.

Optionally, the remote UE can obtain the fifth measurement result through measurement. For example, the fifth measurement result may include but is not limited to at least one of: RSRP, RSRQ, or SINR.

In some embodiments, when the leaving condition for the fifth measurement event is fulfilled, the remote UE does not perform measurement result reporting or does not report the measurement result.

In some embodiments, the preset offset is configured at at least one of: a cell granularity, a remote UE granularity, a relay UE granularity, or a service priority granularity.

Specifically, in the third measurement event, the preset offset is configured at at least one of: a cell granularity, a remote UE granularity, a relay UE granularity, or a service priority granularity.

Specifically, in the fourth measurement event, the preset offset is configured at at least one of: a cell granularity, a remote UE granularity, a relay UE granularity, or a service priority granularity.

Specifically, in the fifth measurement event, the preset offset is configured at at least one of: a cell granularity, a remote UE granularity, a relay UE granularity, or a service priority granularity.

In some embodiments, in different measurement events, the configuration granularities for the preset offsets may be the same or different.

In some embodiments, in different measurement events, the preset offsets may be the same or different.

For example, the preset offset may be configured at the cell granularity, that is, different cells may be configured with different preset offsets.

For another example, the preset offset may be configured at the remote UE granularity, that is, different remote UEs may be configured with different preset offsets.

For another example, the preset offset may be configured at the relay UE granularity, that is, different relay UEs may be configured with different preset offsets.

For another example, the preset offset may be configured at the service priority granularity, that is, different preset offsets may be configured for different service priorities.

In some embodiments, the remote UE may obtain the link measurement value between the serving L2 U2N relay UE and the network device through at least one of the following signaling sent by the serving L2 U2N relay UE: a discovery message, SCI, an SL MAC CE, or a PC5-RRC message.

In some embodiments, the remote UE may obtain the link measurement value between the candidate L2 U2N relay UE and the network device through at least one of the following signaling sent by the candidate L2 U2N relay UE: a discovery message, SCI, an SL MAC CE, or a PC5-RRC message.

In some embodiments, the network device may configure the hysteresis value via RRC signaling, or the network device may configure the hysteresis value via a system broadcast message. Alternatively, the remote UE may obtain the hysteresis value via RRC signaling sent by the network device, or the remote UE may obtain the hysteresis value via a system broadcast message sent by the network device. Specifically, in the case where the remote UE is within network coverage and the remote UE is in an RRC idle state or an RRC deactivated state, the network device may send the hysteresis value to the remote UE via a system broadcast message; in the case where the remote UE is within network coverage and the remote UE is in an RRC connected state, the network device may send the hysteresis value to the remote UE via RRC dedicated signaling.

In some embodiments, the serving L2 U2N relay UE configures the hysteresis value via a discovery message, or the serving L2 U2N relay UE configures the hysteresis value via a PC5-RRC message, or the serving L2 U2N relay UE configures the hysteresis value via a forwarded system broadcast message.

In some embodiments, the remote UE may obtain the hysteresis value via a discovery message sent by the serving L2 U2N relay UE, or the remote UE may obtain the hysteresis value via a PC5-RRC message sent by the serving L2 U2N relay UE, or the remote UE may obtain the hysteresis value via a system broadcast message forwarded by the serving L2 U2N relay UE.

In some embodiments, the hysteresis value may also be referred to as a hysteresis parameter.

In some embodiments, the hysteresis values may be the same or different in different measurement events.

In some embodiments, the network device configures the preset offset via RRC signaling, or the network device configures the preset offset via a system broadcast message. Alternatively, the remote UE may obtain the preset offset via RRC signaling sent by the network device, or the remote UE may obtain the preset offset via a system broadcast message sent by the network device. Specifically, in the case where the remote UE is within network coverage and the remote UE is in an RRC idle state or an RRC deactivated state, the network device may send the preset offset to the remote UE via a system broadcast message. In the case where the remote UE is within network coverage and the remote UE is in an RRC connected state, the network device may send the preset offset to the remote UE via RRC dedicated signaling.

In some embodiments, the serving L2 U2N relay UE configures the preset offset via a discovery message, or the serving L2 U2N relay UE configures the preset offset via a PC5-RRC message, or the serving L2 U2N relay UE configures the preset offset via a forwarded system broadcast message.

In some embodiments, the remote UE may obtain the preset offset via a discovery message sent by the serving L2 U2N relay UE, or the remote UE may obtain the preset offset via a PC5-RRC message sent by the serving L2 U2N relay UE, or the remote UE may obtain the preset offset via a system broadcast message forwarded by the serving L2 U2N relay UE.

Therefore, in the embodiments of the present disclosure, the communication device (such as the network device or the serving L2 U2N relay UE) configures for the remote UE the at least one measurement event for switching between the first relay link and the second relay link, so that the remote UE can report the measurement result based on the configured measurement event, and thus the network device can determine whether to perform switching between relay links based on the reported measurement result.

The above text, in conjunction with FIG. 3, describes in detail method embodiments of the present disclosure. The following text, in conjunction with FIG. 4 to FIG. 8, will describe in detail apparatus embodiments of the present disclosure. It may be understood that, the apparatus embodiment and the method embodiment correspond to each other, and for similar illustrations, reference can be made to the method embodiments.

FIG. 4 is a schematic block diagram of a remote UE 400 according to embodiments of the present disclosure. As illustrated in FIG. 4, the remote UE 400 includes a first communication unit 410 configured to receive first information, where the first information is used to configure at least one measurement event, and the at least one measurement event is for switching between a first relay link and a second relay link, and both the first relay link and the second relay link are for the remote UE to access a network through a relay UE.

In some embodiments, the at least one measurement event includes a first measurement event. In the first measurement event, a link measurement value between the remote UE and a serving L2 U2N relay UE is greater than or equal to a first threshold, and/or a link measurement value between the serving L2 U2N relay UE and a network device is greater than or equal to a second threshold.

In some embodiments, an entering condition for the first measurement event is that the link measurement value between the remote UE and the serving L2 U2N relay UE is greater than or equal to the first threshold, or the entering condition for the first measurement event is that a value obtained by subtracting a hysteresis value from the link measurement value between the remote UE and the serving L2 U2N relay UE is greater than or equal to the first threshold; and/or, a leaving condition for the first measurement event is that the link measurement value between the remote UE and the serving L2 U2N relay UE is less than the first threshold, or the leaving condition for the first measurement event is that a value obtained by adding a hysteresis value to the link measurement value between the remote UE and the serving L2 U2N relay UE is less than the first threshold.

In some embodiments, the entering condition for the first measurement event is that the link measurement value between the serving L2 U2N relay UE and the network device is greater than or equal to the second threshold, or the entering condition for the first measurement event is that a value obtained by subtracting the hysteresis value from the link measurement value between the serving L2 U2N relay UE and the network device is greater than or equal to the second threshold; and/or, the leaving condition for the first measurement event is that the link measurement value between the serving L2 U2N relay UE and the network device is less than the second threshold, or the leaving condition for the first measurement event is that a value obtained by adding the hysteresis value to the link measurement value between the serving L2 U2N relay UE and the network device is less than the second threshold.

In some embodiments, the remote UE 400 further includes a second communication unit 420. The second communication unit 420 is configured to report a first measurement result in the case where the entering condition for the first measurement event is fulfilled, where the first measurement result is used to determine whether to perform switching between the first relay link and the second relay link; and/or, in the case where the leaving condition for the first measurement event is fulfilled, the remote UE does not report the measurement result.

In some embodiments, the at least one measurement event includes a second measurement event. In the second measurement event, a link measurement value between the remote UE and the serving L2 U2N relay UE is less than a third threshold, and/or a link measurement value between the serving L2 U2N relay UE and the network device is less than a fourth threshold.

In some embodiments, the entering condition for the second measurement event is that the link measurement value between the remote UE and the serving L2 U2N relay UE is less than the third threshold, or the entering condition for the second measurement event is that a value obtained by adding a hysteresis value to the link measurement value between the remote UE and the serving L2 U2N relay UE is less than the third threshold; and/or, a leaving condition for the second measurement event is that the link measurement value between the remote UE and the serving L2 U2N relay UE is greater than or equal to a third threshold, or the leaving condition for the second measurement event is that a value obtained by subtracting the hysteresis value from the link measurement value between the remote UE and the serving L2 U2N relay UE is greater than or equal to the third threshold.

In some embodiments, the entering condition for the second measurement event is that the link measurement value between the serving L2 U2N relay UE and the network device is less than the fourth threshold, or the entering condition for the second measurement event is that a value obtained by adding the hysteresis value to the link measurement value between the serving L2 U2N relay UE and the network device is less than the fourth threshold; and/or, the leaving condition for the second measurement event is that the link measurement value between the serving L2 U2N relay UE and the network device is greater than or equal to the fourth threshold, or the leaving condition for the second measurement event is that a value obtained by subtracting the hysteresis value from the link measurement value between the serving L2 U2N relay UE and the network device is greater than or equal to the fourth threshold.

In some embodiments, the remote UE 400 further includes a second communication unit 420. The second communication unit 420 is configured to report a second measurement result when the entering condition for the second measurement event is fulfilled, where the second measurement result is used to determine whether to perform switching between the first relay link and the second relay link; and/or, in the case where the leaving condition for the second measurement event is fulfilled, the remote UE does not report the measurement result.

In some embodiments, the at least one measurement event includes a third measurement event. In the third measurement event, a link measurement value between the remote UE and ae candidate L2 U2N relay UE is greater than or equal to a fifth threshold, and/or a link measurement value between the candidate L2 U2N relay UE and the network device is greater than or equal to a sixth threshold.

In some embodiments, an entering condition for the third measurement event is that a value obtained by adding a preset offset to the link measurement value between the remote UE and the candidate L2 U2N relay UE is greater than or equal to the fifth threshold, or the entering condition for the third measurement event is that a value obtained by subtracting a hysteresis value from a sum of the preset offset and the link measurement value between the remote UE and the candidate L2 U2N relay UE is greater than or equal to the fifth threshold; and/or, a leaving condition for the third measurement event is that the value obtained by adding the preset offset to the link measurement value between the remote UE and the candidate L2 U2N relay UE is less than the fifth threshold, or the leaving condition for the third measurement event is that a value obtained by adding the preset offset and the hysteresis value to the link measurement value between the remote UE and the candidate L2 U2N relay UE is less than the fifth threshold.

In some embodiments, the entering condition for the third measurement event is that the link measurement value between the candidate L2 U2N relay UE and the network device is greater than or equal to the sixth threshold, or the entering condition for the third measurement event is that a value obtained by subtracting the hysteresis value from the link measurement value between the candidate L2 U2N relay UE and the network device is greater than or equal to the sixth threshold; and/or, the leaving condition for the third measurement event is that the link measurement value between the candidate L2 U2N relay UE and the network device is less than the sixth threshold, or the leaving condition for the third measurement event is that a value obtained by adding the hysteresis value to the link measurement value between the candidate L2 U2N relay UE and the network device is less than the sixth threshold.

In some embodiments, the remote UE 400 further includes the second communication unit 420. The second communication unit 420 is configured to report a third measurement result in the case where the entering condition for the third measurement event is fulfilled, where the third measurement result is used to determine whether to perform switching between the first relay link and the second relay link; and/or, in the case where the leaving condition for the third measurement event is fulfilled, the remote UE does not report the measurement result.

In some embodiments, the at least one measurement event includes a fourth measurement event. In the fourth measurement event, a sidelink measurement value measured for the candidate L2 U2N relay UE is higher than a sidelink measurement value measured for the serving L2 U2N relay UE by a preset offset, and/or a link measurement value between the candidate L2 U2N relay UE and the network device is higher than a link measurement value between the serving L2 U2N relay UE and the network device by the preset offset.

In some embodiments, an entering condition for the fourth measurement event is that a value obtained by adding the preset offset to the sidelink measurement value measured for the candidate L2 U2N relay UE is greater than or equal to a value obtained by adding the preset offset and an offset corresponding to a current measurement object to the sidelink measurement value measured for the serving L2 U2N relay UE, or the entering condition for the fourth measurement event is that a value obtained by subtracting a hysteresis value from a sum of the preset offset and the sidelink measurement value measured for the candidate L2 U2N relay UE is greater than or equal to a value obtained by adding the preset offset and the offset corresponding to the current measurement object to the sidelink measurement value measured for the serving L2 U2N relay UE; and/or, a leaving condition for the fourth measurement event is that the value obtained by adding the preset offset to the sidelink measurement value measured for the candidate L2 U2N relay UE is less than the value obtained by adding the preset offset and the offset corresponding to the current measurement object to the sidelink measurement value measured for the serving L2 U2N relay UE, or the leaving condition for the fourth measurement event is that a value obtained by adding the preset offset and the hysteresis value to the sidelink measurement value measured for the candidate L2 U2N relay UE is less than the value obtained by adding the preset offset and the offset corresponding to the current measurement object to the sidelink measurement value measured for the serving L2 U2N relay UE.

In some embodiments, the entering condition for the fourth measurement event is that a value obtained by adding the preset offset to the link measurement value between the candidate L2 U2N relay UE and the network device is greater than or equal to a value obtained by adding the preset offset and the offset corresponding to the current measurement object to the link measurement value between the serving L2 U2N relay UE and the network device, or the entering condition for the fourth measurement event is that a value obtained by subtracting a hysteresis value from a sum of the preset offset and the link measurement value between the candidate L2 U2N relay UE and the network device is greater than or equal to the value obtained by adding the preset offset and the offset corresponding to the current measurement object to the link measurement value between the candidate L2 U2N relay UE and the network device; and/or, the leaving condition for the fourth measurement event is that the value obtained by adding the preset offset to the link measurement value between the candidate L2 U2N relay UE and the network device is less than the value obtained by adding the preset offset and the offset corresponding to the current measurement object to the link measurement value between the serving L2 U2N relay UE and the network device, or the leaving condition for the fourth measurement event is that a value obtained by adding the preset offset and the hysteresis value to the link measurement value between the candidate L2 U2N relay UE and the network device is less than the value obtained by adding the preset offset and the offset corresponding to the current measurement object to the link measurement value between he serving L2 U2N relay UE and the network device.

In some embodiments, the remote UE 400 further includes the second communication unit 420. The second communication unit 420 is configured to report a fourth measurement result when the entering condition for the fourth measurement event is fulfilled, where the fourth measurement result is configured to determine whether to perform switching between the first relay link and the second relay link; and/or, when the leaving condition for the fourth measurement event is fulfilled, the remote UE does not report the measurement result.

In some embodiments, the at least one measurement event includes a fifth measurement event. In the fifth measurement event, a link measurement value between the remote UE and the serving L2 U2N relay UE is less than a seventh threshold and a link measurement value between the remote UE and the candidate L2 U2N relay UE is greater than or equal to an eighth threshold, and/or, a link measurement value between the serving L2 U2N relay UE and the network device is less than a ninth threshold and a link measurement value between the candidate L2 U2N relay UE and the network device is greater than or equal to a tenth threshold.

In some embodiments, an entering condition for the fifth measurement event is that the link measurement value between the remote UE and the serving L2 U2N relay UE is less than the seventh threshold, or, the entering condition for the fifth measurement event is that a value obtained by adding a hysteresis value to the link measurement value between the remote UE and the serving L2 U2N relay UE is less than the seventh threshold, or, the entering condition for the fifth measurement event is that a value obtained by adding a preset offset to the link measurement value between the remote UE and the candidate L2 U2N relay UE is greater than or equal to the eighth threshold, or, the entering condition for the fifth measurement event is that a value obtained by subtracting the hysteresis value from a sum of the preset offset and the link measurement value between the remote UE and the candidate L2 U2N relay UE is greater than or equal to the eighth threshold; and/or, a leaving condition for the fifth measurement event is that the link measurement value between the remote UE and the serving L2 U2N relay UE is greater than or equal to the seventh threshold, or, the leaving condition for the fifth measurement event is that a value obtained by subtracting the hysteresis value from the link measurement value between the remote UE and the serving L2 U2N relay UE is greater than or equal to the seventh threshold, or, the leaving condition for the fifth measurement event is that the value obtained by adding the preset offset to the link measurement value between the remote UE and the candidate L2 U2N relay UE is less than the eighth threshold, or, the leaving condition for the fifth measurement event is that a value obtained by adding the preset offset and the hysteresis value to the link measurement value between the remote UE and the candidate L2 U2N relay UE is less than the eighth threshold.

In some embodiments, the entering condition for the fifth measurement event is that a value obtained by adding the hysteresis value to the link measurement value between the serving L2 U2N relay UE and the network device is less than the ninth threshold, or the entering condition for the fifth measurement event is that a value obtained by subtracting the hysteresis value from a sum of the preset offset and the link measurement value between the candidate L2 U2N relay UE and the network device is greater than or equal to the tenth threshold; and/or, the leaving condition for the fifth measurement event is that a value obtained by subtracting the hysteresis value from the link measurement value between the serving L2 U2N relay UE and the network device is less than the ninth threshold, or the leaving condition for the fifth measurement event is that the value obtained by subtracting the preset offset from a sum of the hysteresis value and the link measurement value between the candidate L2 U2N relay UE and the network device is less than the tenth threshold.

In some embodiments, the remote UE 400 further includes a second communication unit 420. The second communication unit 420 is configured to report a fifth measurement result when the entering condition for the fifth measurement event is fulfilled, where the fifth measurement result is used to determine whether to perform switching between the first relay link and the second relay link; and/or, when the leaving condition for the fifth measurement event is fulfilled, the remote UE does not report the measurement result.

In some embodiments, the preset offset is configured at at least one of: a cell granularity, a remote UE granularity, a relay UE granularity, or a service priority granularity.

In some embodiments, the remote UE obtains the link measurement value between the serving L2 U2N relay UE and the network device through at least one of the following signaling sent by the serving L2 U2N relay UE: a discovery message, SCI, an SL MAC CE, or a PC5-RRC message.

In some embodiments, the remote UE obtains the link measurement value between the candidate L2 U2N relay UE and the network device through at least one of the following signaling sent by the candidate L2 U2N relay UE: a discovery message, SCI, an SL MAC CE, or a PC5-RRC message.

In some embodiments, the remote UE obtains the hysteresis value via RRC signaling sent by the network device, or the remote UE obtains the hysteresis value via a system broadcast message sent by the network device, or the remote UE obtains the hysteresis value via a discovery message sent by the serving L2 U2N relay UE, or the remote UE obtains the hysteresis value via a PC5-RRC message sent by the serving L2 U2N relay UE, or the remote UE obtains the hysteresis value via a system broadcast message forwarded by the serving L2 U2N relay UE.

In some embodiments, the remote UE obtains the preset offset via RRC signaling sent by the network device, or the remote UE obtains the preset offset via a system broadcast message sent by the network device, or the remote UE obtains the preset offset via a discovery message sent by the serving L2 U2N relay UE, or the remote UE obtains the preset offset via a PC5-RRC message sent by the serving L2 U2N relay UE, or the remote UE obtains the preset offset via a system broadcast message forwarded by the serving L2 U2N relay UE.

In some embodiments, the communication unit may be a communication interface or a transceiver, or an input/output interface of a communication chip or an SoC. The processing unit may be one or more processors.

It may be understood that, the remote UE 400 according to the embodiments of the present disclosure may correspond to the remote UE in the method embodiments of the present disclosure, and the above-mentioned and other operations and/or functions of each unit in the remote UE 400 are respectively for realizing the corresponding process of the remote UE in the method 300 illustrated in FIG. 3, which will not be repeated here for the sake of brevity.

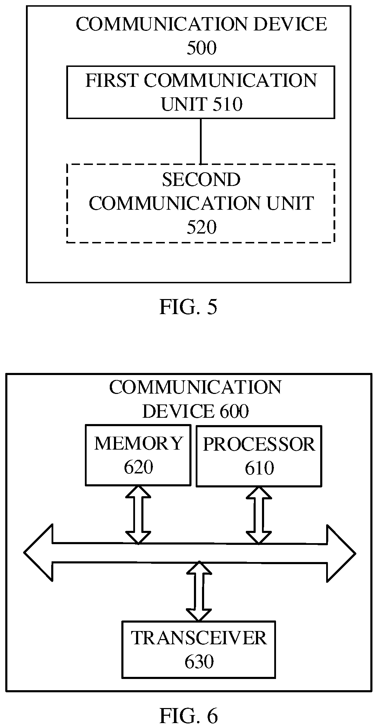

FIG. 5 is a schematic block diagram of a communication device 500 according to embodiments of the present disclosure. As illustrated in FIG. 5, the communication device 500 includes a first communication unit 510 configured to send first information, where the first information is used to configure at least one measurement event, and the at least one measurement event is for switching between a first relay link and a second relay link, and both the first relay link and the second relay link are for a remote UE to access a network through a relay UE.

In some embodiments, the at least one measurement event includes a first measurement event. In the first measurement event, a link measurement value between the remote UE and a serving L2 U2N relay UE is greater than or equal to a first threshold, and/or a link measurement value between the serving L2 U2N relay UE and a network device is greater than or equal to a second threshold.

In some embodiments, an entering condition for the first measurement event is that the link measurement value between the remote UE and the serving L2 U2N relay UE is greater than or equal to the first threshold, or the entering condition for the first measurement event is that a value obtained by subtracting a hysteresis value from the link measurement value between the remote UE and the serving L2 U2N relay UE is greater than or equal to the first threshold; and/or, a leaving condition for the first measurement event is that the link measurement value between the remote UE and the serving L2 U2N relay UE is less than the first threshold, or the leaving condition for the first measurement event is that a value obtained by adding the hysteresis value to the link measurement value between the remote UE and the serving L2 U2N relay UE is less than the first threshold.

In some embodiments, the entering condition for the first measurement event is that the link measurement value between the serving L2 U2N relay UE and the network device is greater than or equal to the second threshold, or the entering condition for the first measurement event is that a value obtained by subtracting the hysteresis value from the link measurement value between the serving L2 U2N relay UE and the network device is greater than or equal to the second threshold; and/or, the leaving condition for the first measurement event is that the link measurement value between the serving L2 U2N relay UE and the network device is less than the second threshold, or the leaving condition for the first measurement event is that a value obtained by adding the hysteresis value to the link measurement value between the serving L2 U2N relay UE and the network device is less than the second threshold.

In some embodiments, the communication device further includes a second communication unit 520. The second communication unit 520 is configured to receive a first measurement result. The first measurement result is sent by the remote UE when the entering condition for the first measurement event is fulfilled, and the first measurement result is used to determine whether to perform switching between the first relay link and the second relay link.

In some embodiments, the at least one measurement event includes a second measurement event. In the second measurement event, a link measurement value between the remote UE and the serving L2 U2N relay UE is less than a third threshold, and/or a link measurement value between the serving L2 U2N relay UE and the network device is less than a fourth threshold.

In some embodiments, an entering condition for the second measurement event is that the link measurement value between the remote UE and the serving L2 U2N relay UE is less than the third threshold, or the entering condition for the second measurement event is that a value obtained by adding a hysteresis value to the link measurement value between the remote UE and the serving L2 U2N relay UE is less than the third threshold; and/or, a leaving condition for the second measurement event is that the link measurement value between the remote UE and the serving L2 U2N relay UE is greater than or equal to the third threshold, or the leaving condition for the second measurement event is that a value obtained by subtracting the hysteresis value from the link measurement value between the remote UE and the serving L2 U2N relay UE is greater than or equal to the third threshold.

In some embodiments, the entering condition for the second measurement event is that the link measurement value between the serving L2 U2N relay UE and the network device is less than the fourth threshold, or the entering condition for the second measurement event is that a value obtained by adding the hysteresis value to the link measurement value between the serving L2 U2N relay UE and the network device is less than the fourth threshold; and/or, the leaving condition for the second measurement event is that the link measurement value between the serving L2 U2N relay UE and the network device is greater than or equal to the fourth threshold, or the leaving condition for the second measurement event is that a value obtained by subtracting the hysteresis value from the link measurement value between the serving L2 U2N relay UE and the network device is greater than or equal to the fourth threshold.

In some embodiments, the communication device further includes the second communication unit 520. The second communication unit 520 is configured to receive a second measurement result. The second measurement result is sent by the remote UE when the entering condition for the second measurement event is fulfilled, and the second measurement result is used to determine whether to perform switching between the first relay link and the second relay link.

In some embodiments, the at least one measurement event includes a third measurement event. In the third measurement event, a link measurement value between the remote UE and a candidate L2 U2N relay UE is greater than or equal to a fifth threshold, and/or a link measurement value between the candidate L2 U2N relay UE and the network device is greater than or equal to a sixth threshold.

In some embodiments, an entering condition for the third measurement event is that a value obtained by adding a preset offset to the link measurement value between the remote UE and the candidate L2 U2N relay UE is greater than or equal to the fifth threshold, or the entering condition for the third measurement event is that a value obtained by subtracting a hysteresis value from a sum of the preset offset and the link measurement value between the remote UE and the candidate L2 U2N relay UE is greater than or equal to the fifth threshold; and/or, a leaving condition for the third measurement event is that the value obtained by adding the preset offset to the link measurement value between the remote UE and the candidate L2 U2N relay UE is less than the fifth threshold, or the leaving condition for the third measurement event is that a value obtained by adding the preset offset and the hysteresis value to the link measurement value between the remote UE and the candidate L2 U2N relay UE is less than the fifth threshold.

In some embodiments, the entering condition for the third measurement event is that the link measurement value between the candidate L2 U2N relay UE and the network device is greater than or equal to the sixth threshold, or the entering condition for the third measurement event is that a value obtained by subtracting the hysteresis value from the link measurement value between the candidate L2 U2N relay UE and the network device is greater than or equal to the sixth threshold; and/or, the leaving condition for the third measurement event is that the link measurement value between the candidate L2 U2N relay UE and the network device is less than the sixth threshold, or the leaving condition for the third measurement event is that the value obtained by adding the hysteresis value to the link measurement value between the candidate L2 U2N relay UE and the network device is less than the sixth threshold.

In some embodiments, the communication device further includes the second communication unit 520. The second communication unit 520 is configured to receive a third measurement result. The third measurement result is sent by the remote UE when the entering condition for the third measurement event is fulfilled, and the third measurement result is used to determine whether to perform switching between the first relay link and the second relay link.

In some embodiments, the at least one measurement event includes a fourth measurement event. In the fourth measurement event, a sidelink measurement value measured for the candidate L2 U2N relay UE is higher than a sidelink measurement value measured for the serving L2 U2N relay UE by a preset offset, and/or a link measurement value between the candidate L2 U2N relay UE and the network device is higher than a link measurement value between the serving L2 U2N relay UE and the network device by the preset offset.

In some embodiments, an entering condition for the fourth measurement event is that a value obtained by adding the preset offset to the sidelink measurement value measured for the candidate L2 U2N relay UE is greater than or equal to a value obtained by adding the preset offset and an offset corresponding to a current measurement object to the sidelink measurement value measured for the serving L2 U2N relay UE, or the entering condition for the fourth measurement event is that a value obtained by subtracting a hysteresis value from a sum of the preset offset and the sidelink measurement value measured for the candidate L2 U2N relay UE is greater than or equal to the value obtained by adding the preset offset and the offset corresponding to the current measurement object to the sidelink measurement value measured for the serving L2 U2N relay UE; and/or, a leaving condition for the fourth measurement event is that the value obtained by adding the preset offset to the sidelink measurement value measured for the candidate L2 U2N relay UE is less than the value obtained by adding the preset offset and the offset corresponding to the current measurement object to the sidelink measurement value measured for the serving L2 U2N relay UE, or the leaving condition for the fourth measurement event is that the value obtained by adding the preset offset and the hysteresis value to the sidelink measurement value measured for the candidate L2 U2N relay UE is less than the value obtained by adding the preset offset and the offset corresponding to the current measurement object to the sidelink measurement value measured for the serving L2 U2N relay UE.

In some embodiments, the entering condition for the fourth measurement event is that a value obtained by adding the preset offset to the link measurement value between the candidate L2 U2N relay UE and the network device is greater than or equal to a value obtained by adding the preset offset and the offset corresponding to the current measurement object to the link measurement value between the serving L2 U2N relay UE and the network device, or the entering condition for the fourth measurement event is that a value obtained by subtracting the hysteresis value from a sum of the preset offset and the link measurement value between the candidate L2 U2N relay UE and the network device is greater than or equal to the value obtained by adding the preset offset and the offset corresponding to the current measurement object to the link measurement value between the serving L2 U2N relay UE and the network device; and/or, the leaving condition for the fourth measurement event is that the value obtained by adding the preset offset to the link measurement value between the candidate L2 U2N relay UE and the network device is less than the value obtained by adding the preset offset and the offset corresponding to the current measurement object to the link measurement value between the serving L2 U2N relay UE and the network device, or the leaving condition for the fourth measurement event is that a value obtained by adding the preset offset and the hysteresis value to the link measurement value between the candidate L2 U2N relay UE and the network device is less than the value obtained by adding the preset offset and the offset corresponding to the current measurement object to the link measurement value between the serving L2 U2N relay UE and the network device.

In some embodiments, the communication device further includes the second communication unit 520. The second communication unit 520 is configured to receive a fourth measurement result. The fourth measurement result is sent by the remote UE when the entering condition for the fourth measurement event is fulfilled, and the fourth measurement result is used to determine whether to perform switching between the first relay link and the second relay link.

In some embodiments, the at least one measurement event includes a fifth measurement event. In the fifth measurement event, a link measurement value between the remote UE and the serving L2 U2N relay UE is less than a seventh threshold and a link measurement value between the remote UE and the candidate L2 U2N relay UE is greater than or equal to an eighth threshold, and/or, a link measurement value between the serving L2 U2N relay UE and the network device is less than a ninth threshold and a link measurement value between the candidate L2 U2N relay UE and the network device is greater than or equal to a tenth threshold.

In some embodiments, an entering condition for the fifth measurement event is that the link measurement value between the remote UE and the serving L2 U2N relay UE is less than the seventh threshold, or, the entering condition for the fifth measurement event is that a value obtained by adding a hysteresis value to the link measurement value between the remote UE and the serving L2 U2N relay UE is less than the seventh threshold, or, the entering condition for the fifth measurement event is that a value obtained by adding a preset offset to the link measurement value between the remote UE and the candidate L2 U2N relay UE is greater than or equal to the eighth threshold, or, the entering condition for the fifth measurement event is that a value obtained by subtracting the hysteresis value from a sum of the preset offset and the link measurement value between the remote UE and the candidate L2 U2N relay UE and is greater than or equal to the eighth threshold; and/or, a leaving condition for the fifth measurement event is that the link measurement value between the remote UE and the serving L2 U2N relay UE is greater than or equal to the seventh threshold, or, the leaving condition for the fifth measurement event is that a value obtained by subtracting the hysteresis value from the link measurement value between the remote UE and the serving L2 U2N relay UE is greater than or equal to the seventh threshold, or, the leaving condition for the fifth measurement event is that the value obtained by adding the preset offset to the link measurement value between the remote UE and the candidate L2 U2N relay UE is less than the eighth threshold, or, the leaving condition for the fifth measurement event is that a value obtained by adding the preset offset and the hysteresis value to the link measurement value between the remote UE and the candidate L2 U2N relay UE is less than the eighth threshold.

In some embodiments, the entering condition for the fifth measurement event is that a value obtained by adding the hysteresis value to the link measurement value between the serving L2 U2N relay UE and the network device is less than the ninth threshold, or the entering condition for the fifth measurement event is that a value obtained by subtracting the hysteresis value from a sum of the preset offset and the link measurement value between the candidate L2 U2N relay UE and the network device is greater than or equal to the tenth threshold; and/or, the leaving condition for the fifth measurement event is that a value obtained by subtracting the hysteresis value from the link measurement value between the serving L2 U2N relay UE and the network device is less than the ninth threshold, or the leaving condition for the fifth measurement event is that the value obtained by subtracting the preset offset from a sum of the hysteresis value and the link measurement value between the candidate L2 U2N relay UE and the network device is less than the tenth threshold.

In some embodiments, the communication device further includes the second communication unit 520. The second communication unit 520 is configured to receive the fifth measurement result, where the fifth measurement result is sent by the remote UE when the entering condition for the fifth measurement event is fulfilled, and the fifth measurement result is used to determine whether to perform switching between the first relay link and the second relay link.

In some embodiments, the preset offset is configured at at least one of a cell granularity, a remote UE granularity, a relay UE granularity, or a service priority granularity.

In some embodiments, in the case where the communication device is the serving L2 U2N relay UE, the serving L2 U2N relay UE carries the link measurement value between the serving L2 U2N relay UE and the network device via at least one of: a discovery message, SCI, an SL MAC CE, or a PC5-RRC message.

In some embodiments, in the case where the communication device is a network device, the network device configures the hysteresis value via RRC signaling, or the network device configures the hysteresis value via a system broadcast message. Alternatively, in the case where the communication device is a serving L2 U2N relay UE, the serving L2 U2N relay UE configures the hysteresis value via a discovery message, or the serving L2 U2N relay UE configures the hysteresis value via a PC5-RRC message, or the serving L2 U2N relay UE configures the hysteresis value via a forwarded system broadcast message.

In some embodiments, in the case where the communication device is a network device, the network device configures the preset offset via RRC signaling, or the network device configures the preset offset via a system broadcast message. Alternatively, in the case where the communication device is a serving L2 U2N relay UE, the serving L2 U2N relay UE configures the preset offset via a discovery message, or the serving L2 U2N relay UE configures the preset offset via a PC5-RRC message, or the serving L2 U2N relay UE configures the preset offset via a forwarded system broadcast message.

In some embodiments, the communication device is a network device or a serving L2 U2N relay UE.

In some embodiments, the communication unit may be a communication interface or a transceiver, or an input/output interface of a communication chip or an SoC. The processing unit may be one or more processors.

It may be understood that, the communication device 500 according to the embodiments of the present disclosure may correspond to the communication device in the method embodiment of the present disclosure, and the above and other operations and/or functions of each unit in the communication device 500 are respectively for implementing the corresponding process of the communication device in the method 300 illustrated in FIG. 3, which will not be repeated here for the sake of brevity.

FIG. 6 is a schematic structural diagram of a communication device 600 according to embodiments of the present disclosure. The communication device 600 illustrated in FIG. 6 includes a processor 610, and the processor 610 can invoke and run a computer program in a memory to implement the method in the embodiments of the present disclosure.

In some embodiments, as illustrated in FIG. 6, the communication device 600 may further include a memory 620. The processor 610 may invoke and run a computer program in the memory 620 to implement the method in the embodiments of the present disclosure.

The memory 620 may be a separate device independent of the processor 610, or may be integrated into the processor 610.

In some embodiments, as illustrated in FIG. 6, the communication device 600 may further include a transceiver 630. The processor 610 can control the transceiver 630 to communicate with other devices, specifically, to send information or data to other devices, or to receive information or data sent by other devices.

The transceiver 630 may include a transmitter and a receiver. The transceiver 630 may further include an antenna, and there may be one or more antennas.

In some embodiments, the processor 610 may implement the functions of a processing unit in a remote UE, or the processor 610 may implement the functions of a processing unit in a communication device, which will not be described in detail for the sake of brevity.

In some embodiments, the transceiver 630 may implement the functions of a communication unit in a remote UE, which will not be described in detail here for the sake of brevity.

In some embodiments, the transceiver 630 may implement the functions of a communication unit in a communication device, which will not be described in detail here for the sake of brevity.

In some embodiments, the communication device 600 may specifically be a remote UE of the embodiments of the present disclosure, and the communication device 600 can implement the corresponding processes implemented by the remote UE in each method of the embodiments of the present disclosure, which will not be described in detail here for the sake of brevity.

In some embodiments, the communication device 600 may specifically be the communication device of the embodiments of the present disclosure, and the communication device 600 can implement the corresponding processes implemented by the communication device in each method of the embodiments of the present disclosure, which will not be described in detail here for the sake of brevity.

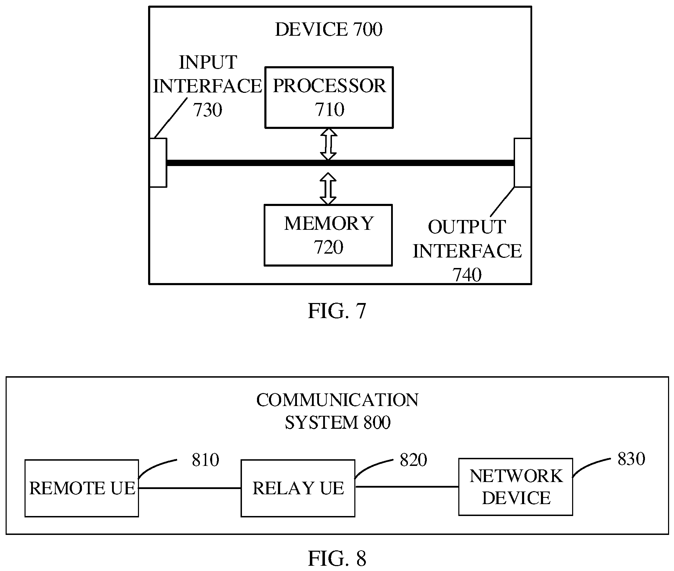

FIG. 7 is a schematic structural diagram of a device according to embodiments of the present disclosure. The device 700 illustrated in FIG. 7 includes a processor 710, which can invoke and run a computer program in a memory to implement the method according to the embodiments of the present disclosure.

In some embodiments, as illustrated in FIG. 7, the device 700 may further include a memory 720. The processor 710 may call and run a computer program in the memory 720 to implement the method in the embodiments of the present disclosure.

The memory 720 may be a separate device independent of the processor 710, or may be integrated into the processor 710.

In some embodiments, the device 700 may further include an input interface 730. The processor 710 may control the input interface 730 to communicate with other devices or chips, and specifically, to obtain information or data sent by other devices or chips. Optionally, the processor 710 may be located inside or outside the chip.

In some embodiments, the processor 710 may implement the functions of a processing unit in a remote UE, or the processor 710 may implement the functions of a processing unit in a communication device, which will not be described in detail for the sake of brevity.

In some embodiments, the input interface 730 may implement the functions of a communication unit in a remote UE, or the input interface 730 may implement the functions of a communication unit in a communication device.

In some embodiments, the device 700 may further include an output interface 740. The processor 710 can control the output interface 740 to communicate with other devices or chips, and specifically, can output information or data to other devices or chips. Optionally, the processor 710 may be located inside or outside the chip.

In some embodiments, the output interface 740 can implement the functions of a communication unit in a remote UE, or the output interface 740 can implement the function of a communication unit in a communication device.

In some embodiments, the device can be applied to the remote UE in the embodiments of the present disclosure, and the device can implement the corresponding processes implemented by the remote UE in each method of the embodiments of the present disclosure, which will not be repeated here for the sake of brevity.

In some embodiments, the device may be applied to the communication device in the embodiments of the present disclosure, and the device an implement the corresponding processes implemented by the communication device in the various methods in the embodiments of the present disclosure, which will not be described in detail here for the sake of brevity.

In some embodiments, the device mentioned in the embodiments of the present disclosure may also be a chip, for example, a system-level chip, a system chip, a chip system, or a system-on-chip.

FIG. 8 is a schematic block diagram of a communication system 800 according to embodiments of the present disclosure. As illustrated in FIG. 8, the communication system 800 includes a remote UE 810, a relay UE 820, and a network device 830.

The remote UE 810 can be configured to implement the corresponding functions implemented by the remote UE in the above methods, the remote UE 820 can be configured to implement the corresponding functions implemented by the relay UE in the above methods, and the network device 830 can be configured to implement the corresponding functions implemented by the network device in the above methods, which will not be repeated here for the sake of brevity.

It may be understood that, the processor of the embodiments of the present disclosure may be an integrated circuit chip with signal processing capabilities. In the implementation process, each step of the above method embodiments can be completed by an integrated logic circuit of hardware in the processor or instructions in the form of software. The above processor may be a general-purpose processor, a digital signal processor (DSP), an application-specific integrated circuit (ASIC), a field programmable gate array (FPGA) or other programmable logic devices, discrete gates or transistor logic devices, discrete hardware components. The methods, steps, and logic block diagrams disclosed in the embodiments of the present disclosure can be implemented or executed. The general-purpose processor may be a microprocessor or the processor may also be any conventional processor, etc. The steps of the methods disclosed in the embodiments of the present disclosure can be directly embodied as being executed by a hardware decoding processor, or by a combination of hardware and software modules in the decoding processor. Software modules may be located in a mature storage medium in the field such as a random access memory (RAM), a flash memory, a read-only memory (ROM), a programmable read-only memory (PROM) or an electrically erasable programmable memory, a register, etc. The storage medium is located in a memory, and the processor can read information in the memory and complete the steps of the above methods in combination with the hardware of the processor.

It may be understood that, the memory in the embodiments of the present disclosure can be a volatile memory or a non-volatile memory, or can include both volatile and non-volatile memories. The non-volatile memory may be a ROM, a PROM, an erasable programmable read-only memory (EPROM), an electrically erasable programmable read-only memory (EEPROM), or a flash memory. The volatile memory may be a RAM, which is used as an external cache. By way of example and not limitation, many forms of RAM are available, such as a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM), and a direct rambus random access memory (DR RAM). It may be noted that, the memory in the systems and methods described herein is intended to include, but is not limited to, these and any other suitable types of memory.

It may be understood that, the above-mentioned memory is exemplary but not restrictive. For example, the memory in the embodiments of the present disclosure may also be an SRAM, a DRAM, an SDRAM), a DDR SDRAM, an ESDRAM, an SLDRAM, and a DR RAM, etc. That is to say, the memory in the embodiments of the present disclosure is intended to include but not limited to these and any other suitable types of memory.

The embodiments of the present disclosure further provide a computer-readable storage medium for storing a computer program.

In some embodiments, the computer-readable storage medium can be applied to the communication device in the embodiments of the present disclosure, and the computer program enables the computer to execute the corresponding processes implemented by the communication device in the various methods of the embodiments of the present disclosure, which will not be repeated here for the sake of brevity.

In some embodiments, the computer-readable storage medium can be applied to the remote UE in the embodiments of the present disclosure, and the computer program enables the computer to execute the corresponding processes implemented by the remote UE in the various methods of the embodiments of the present disclosure, which will not be repeated here for the sake of brevity.

The embodiments of the present disclosure further provide a computer program product, including computer program instructions.

In some embodiments, the computer program product can be applied to the communication device in the embodiments of the present disclosure, and the computer program instructions enable the computer to execute the corresponding processes implemented by the communication device in the various methods of the embodiments of the present disclosure, which will not be repeated here for the sake of brevity.

In some embodiments, the computer program product can be applied to the remote UE in the embodiments of the present disclosure, and the computer program instructions enable the computer to execute the corresponding processes implemented by the remote UE in the various methods of the embodiments of the present disclosure, which will not be repeated here for the sake of brevity.

The embodiment of the present disclosure further provides a computer program.

In some embodiments, the computer program can be applied to the communication device in the embodiments of the present disclosure. When the computer program is run on a computer, the computer executes the corresponding processes implemented by the communication device in the various methods of the embodiments of the present disclosure, which will not be repeated here for the sake of brevity.

In some embodiments, the computer program can be applied to the remote UE in the embodiments of the present disclosure. When the computer program is run on the computer, the computer executes the corresponding processes implemented by the remote UE in the various methods of the embodiments of the present disclosure, which will not be repeated here for the sake of brevity.

Those of ordinary skill in the art will appreciate that the units and algorithm steps of each example described in conjunction with the embodiments disclosed herein can be implemented in electronic hardware, or a combination of computer software and electronic hardware. Whether these functions are performed in hardware or software depends on the specific application and design constraints of the technical solution. Professional and technical personnel can use different methods to implement the described functions for each specific application, but such implementation should not be considered to be beyond the scope of the present disclosure.

Those skilled in the art can clearly understand that, for the convenience and brevity of illustration, for the specific operation processes of the systems, devices and units described above, reference can be made to the corresponding processes in the aforementioned method embodiments, which will not be repeated here.

In the several embodiments provided in the present disclosure, it may be understood that, the disclosed systems, devices, and methods can be implemented in other ways. For example, the device embodiments described above are only schematic. For example, the division of the units is only a logical function division. There may be other division manners in actual implementation, such as multiple units or components can be combined or integrated into another system, or some features can be ignored or not executed. Another point is that the mutual coupling or direct coupling or communication connection illustrated or discussed can be indirect coupling or communication connection of devices or units through some interfaces, which can be electrical, mechanical, or other forms.

The units described as separate components may or may not be physically separated, and the components illustrated as units may or may not be physical units, that is, they may be located in one place or distributed on multiple network units. Some or all of the units may be selected according to actual needs to achieve the purpose of the solutions of the embodiments.

In addition, each functional unit in each embodiment of the present disclosure may be integrated into one processing unit, or each unit may exist physically separately, or two or more units may be integrated into one unit.

If the functions are implemented in the form of software functional units and sold or used as independent products, they can be stored in a computer-readable storage medium. In view of such an understanding, the technical solution of the present disclosure can be embodied in the form of a software product in essence or in other words, the part that contributes to the prior art or the part of the technical solution can be embodied in the form of a software product. The computer software product is stored in a storage medium, including several instructions for enabling a computer device (which can be a personal computer, server, or network device, etc.) to execute all or part of the steps of the method described in each embodiment of the present disclosure. The aforementioned storage medium includes various media that can store program codes, such as a universal serial bus (USB) disk, a mobile hard disk, a ROM, a RAM, a magnetic disk, or an optical disk.

The above is only a specific implementation of the present disclosure, but the protection scope of the present disclosure is not limited thereto. Any person of ordinary skill in the technical field can easily think of changes or substitutions within the technical scope disclosed in the present disclosure, which should be included in the protection scope of the present disclosure. Therefore, the protection scope of the present disclosure should be based on the protection scope of the claims.

## Claims

1. A wireless communication method, comprising:
receiving, by a remote user equipment (UE), first information, wherein the first information is used to configure at least one measurement event, wherein the at least one measurement event is for switching between a first relay link and a second relay link, and both the first relay link and the second relay link are for the remote UE to access a network through a relay UE.

2. The method according to claim 1, wherein
the at least one measurement event comprises a first measurement event;
in the first measurement event, a link measurement value between the remote UE and a serving layer-2 (L2) UE to network (U2N) relay UE is greater than or equal to a first threshold, and/or, a link measurement value between the serving L2 U2N relay UE and a network device is greater than or equal to a second threshold.

3. The method according to claim 2, wherein
an entering condition for the first measurement event is that the link measurement value between the remote UE and the serving L2 U2N relay UE is greater than or equal to the first threshold, or the entering condition for the first measurement event is that a value obtained by subtracting a hysteresis value from the link measurement value between the remote UE and the serving L2 U2N relay UE is greater than or equal to the first threshold; and/or,
a leaving condition for the first measurement event is that the link measurement value between the remote UE and the serving L2 U2N relay UE is less than the first threshold, or the leaving condition for the first measurement event is that a value obtained by adding the hysteresis value to the link measurement value between the remote UE and the serving L2 U2N relay UE is less than the first threshold.

4. The method according to claim 2, wherein
an entering condition for the first measurement event is that the link measurement value between the serving L2 U2N relay UE and the network device is greater than or equal to the second threshold, or the entering condition for the first measurement event is that a value obtained by subtracting a hysteresis value from the link measurement value between the serving L2 U2N relay UE and the network device is greater than or equal to the second threshold; and/or,
a leaving condition for the first measurement event is that the link measurement value between the serving L2 U2N relay UE and the network device is less than the second threshold, or the leaving condition for the first measurement event is that a value obtained by adding the hysteresis value to the link measurement value between the serving L2 U2N relay UE and the network device is less than the second threshold.

5. The method according to claim 3 or 4, further comprising:
reporting, by the remote UE, a first measurement result in a case where the entering condition for the first measurement event is fulfilled, wherein the first measurement result is used to determine whether to perform switching between the first relay link and the second relay link; and/or,
skipping, by the remote UE, measurement result reporting in a case where the leaving condition for the first measurement event is fulfilled.

6. The method according to claim 1, wherein
the at least one measurement event comprises a second measurement event;
in the second measurement event, a link measurement value between the remote UE and a serving L2 U2N relay UE is less than a third threshold, and/or a link measurement value between the serving L2 U2N relay UE and a network device is less than a fourth threshold.

7. The method according to claim 6, wherein
an entering condition for the second measurement event is that the link measurement value between the remote UE and the serving L2 U2N relay UE is less than the third threshold, or the entering condition for the second measurement event is that a value obtained by adding a hysteresis value to the link measurement value between the remote UE and the serving L2 U2N relay UE is less than the third threshold; and/or,
a leaving condition for the second measurement event is that the link measurement value between the remote UE and the serving L2 U2N relay UE is greater than or equal to the third threshold, or the leaving condition for the first measurement event is that a value obtained by subtracting the hysteresis value from the link measurement value between the remote UE and the serving L2 U2N relay UE is greater than or equal to the third threshold.

8. The method according to claim 6, wherein
an entering condition for the second measurement event is that the link measurement value between the serving L2 U2N relay UE and the network device is less than the fourth threshold, or the entering condition for the second measurement event is that a value obtained by adding a hysteresis value to the link measurement value between the serving L2 U2N relay UE and the network device is less than the fourth threshold; and/or,
a leaving condition for the second measurement event is that the link measurement value between the serving L2 U2N relay UE and the network device is greater than or equal to the fourth threshold, or the leaving condition for the second measurement event is that a value obtained by subtracting the hysteresis value from the link measurement value between the serving L2 U2N relay UE and the network device is larger than or equal to the fourth threshold.

9. The method according to claim 7 or 8, further comprising:
reporting, by the remote UE, a second measurement result in a case where the entering condition for the second measurement event is fulfilled, wherein the second measurement result is used to determine whether to perform switching between the first relay link and the second relay link; and/or,
skipping, by the remote UE, measurement result reporting in a case where the leaving condition for the second measurement event is fulfilled.

10. The method according to claim 1, wherein
the at least one measurement event comprises a third measurement event;
in the third measurement event, a link measurement value between the remote UE and a candidate L2 U2N relay UE is greater than or equal to a fifth threshold, and/or a link measurement value between the candidate L2 U2N relay UE and a network device is greater than or equal to a sixth threshold.

11. The method according to claim 10, wherein
an entering condition for the third measurement event is that a value obtained by adding a preset offset to the link measurement value between the remote UE and the candidate L2 U2N relay UE is greater than or equal to the fifth threshold, or the entering condition for the third measurement event is that a value obtained by subtracting a hysteresis value from a sum of the preset offset and the link measurement value between the remote UE and the candidate L2 U2N relay UE is greater than or equal to the fifth threshold; and/or,
a leaving condition for the third measurement event is that the value obtained by adding the preset offset to the link measurement value between the remote UE and the candidate L2 U2N relay UE is less than the fifth threshold, or the leaving condition for the third measurement event is that a value obtained by adding the hysteresis value and the preset offset to the link measurement value between the remote UE and the candidate L2 U2N relay UE is less than the fifth threshold.

12. The method according to claim 10, wherein
an entering condition for the third measurement event is that the link measurement value between the candidate L2 U2N relay UE and the network device is greater than or equal to the sixth threshold, or the entering condition for the third measurement event is that a value obtained by subtracting a hysteresis value from the link measurement value between the candidate L2 U2N relay UE and the network device is greater than or equal to the sixth threshold; and/or,
the leaving condition for the third measurement event is that the link measurement value between the candidate L2 U2N relay UE and the network device is less than the sixth threshold, or the leaving condition for the third measurement event is that a value obtained by adding the hysteresis value to the link measurement value between the candidate L2 U2N relay UE and the network device is less than the sixth threshold.

13. The method according to claim 11 or 12, further comprising:
reporting, by the remote UE, a third measurement result in a case where the entering condition for the third measurement event is fulfilled, wherein the third measurement result is used to determine whether to perform switching between the first relay link and the second relay link; and/or,
skipping, by the remote UE, measurement result reporting in a case where the leaving condition for the third measurement event is fulfilled.

14. The method according to claim 1, wherein
the at least one measurement event comprises a fourth measurement event;
in the fourth measurement event, a sidelink measurement value measured for a candidate L2 U2N relay UE is higher than a sidelink measurement value measured for a serving L2 U2N relay UE by a preset offset, and/or a link measurement value between the candidate L2 U2N relay UE and a network device is higher than a link measurement value between the serving L2 U2N relay UE and the network device by the preset offset.

15. The method according to claim 14, wherein
an entering condition for the fourth measurement event is that a value obtained by adding the preset offset to the sidelink measurement value measured for the candidate L2 U2N relay UE is greater than or equal to a value obtained by adding the preset offset and an offset corresponding to a current measurement object to the sidelink measurement value measured for the serving L2 U2N relay UE, or the entering condition for the fourth measurement event is that a value obtained by subtracting a hysteresis value from a sum of the preset offset and the sidelink measurement value measured for the candidate L2 U2N relay UE is greater than or equal to the value obtained by adding the preset offset and an offset corresponding to the current measurement object to the sidelink measurement value measured for the serving L2 U2N relay UE; and/or,
a leaving condition for the fourth measurement event is that the value obtained by adding the preset offset to the sidelink measurement value measured for the candidate L2 U2N relay UE is less than the value obtained by adding the preset offset and the offset corresponding to the current measurement object to the sidelink measurement value measured for the serving L2 U2N relay UE, or the leaving condition for the fourth measurement event is that a value obtained by adding the preset offset and the hysteresis value to the sidelink measurement value measured for the candidate L2 U2N relay UE is less than the value obtained by adding the preset offset and the offset corresponding to the current measurement object to the sidelink measurement value measured for the serving L2 U2N relay UE.

16. The method according to claim 14, wherein
an entering condition for the fourth measurement event is that a value obtained by adding the preset offset to the link measurement value between the candidate L2 U2N relay UE and the network device is greater than or equal to a value obtained by adding the preset offset and an offset corresponding to a current measurement object to the link measurement value between the serving L2 U2N relay UE and the network device, or the entering condition for the fourth measurement event is that a value obtained by subtracting a hysteresis value from a sum of the preset offset and the link measurement value between the candidate L2 U2N relay UE and the network device is greater than or equal to the value obtained by adding the preset offset and the offset corresponding to the current measurement object to the link measurement value between the serving L2 U2N relay UE and the network device; and/or,
a leaving condition for the fourth measurement event is that the value obtained by adding the preset offset to the link measurement value between the candidate L2 U2N relay UE and the network device is less than the value obtained by adding the preset offset and the offset corresponding to the current measurement object to the link measurement value between the serving L2 U2N relay UE and the network device, or the leaving condition for the fourth measurement event is that a value obtained by adding the preset offset and the hysteresis value to the link measurement value between the candidate L2 U2N relay UE and the network device is less than the value obtained by adding the preset offset and the offset corresponding to the current measurement object to the link measurement value between the serving L2 U2N relay UE and the network device.

17. The method according to claim 15 or 16, further comprising
reporting, by the remote UE, a fourth measurement result in a case where the entering condition for the fourth measurement event is fulfilled, wherein the fourth measurement result is used to determine whether to perform switching between the first relay link and the second relay link; and/or,
skipping, by the remote UE, measurement result reporting in a case where the leaving condition for the fourth measurement event is fulfilled.

18. The method according to claim 1, wherein
the at least one measurement event comprises a fifth measurement event;
in the fifth measurement event, a link measurement value between the remote UE and a serving L2 U2N relay UE is less than a seventh threshold and a link measurement value between the remote UE and a candidate L2 U2N relay UE is greater than or equal to an eighth threshold, and/or, a link measurement value between the serving L2 U2N relay UE and a network device is less than a ninth threshold and a link measurement value between the candidate L2 U2N relay UE and the network device is greater than or equal to a tenth threshold.

19. The method according to claim 18, wherein
an entering condition for the fifth measurement event is that the link measurement value between the remote UE and the serving L2 U2N relay UE is less than the seventh threshold, or the entering condition for the fifth measurement event is that a value obtained by adding a hysteresis value to the link measurement value between the remote UE and the serving L2 U2N relay UE is less than the seventh threshold, or the entering condition for the fifth measurement event is that a value obtained by adding a preset offset to the link measurement value between the remote UE and the candidate L2 U2N relay UE is greater than or equal to the eighth threshold, or the entering condition for the fifth measurement event is that a value obtained by subtracting the hysteresis value from a sum of the preset offset and the link measurement value between the remote UE and the candidate L2 U2N relay UE is greater than or equal to the eighth threshold; and/or,
a leaving condition for the fifth measurement event is that the link measurement value between the remote UE and the serving L2 U2N relay UE is greater than or equal to the seventh threshold, or, the leaving condition for the fifth measurement event is that a value obtained by subtracting the hysteresis value from the link measurement value between the remote UE and the serving L2 U2N relay UE is greater than or equal to the seventh threshold, or, the leaving condition for the fifth measurement event is that the value obtained by adding the preset offset to the link measurement value between the remote UE and the candidate L2 U2N relay UE is less than the eighth threshold, or, the leaving condition for the fifth measurement event is that a value obtained by adding the preset offset and the hysteresis value to the link measurement value between the remote UE and the candidate L2 U2N relay UE is less than the eighth threshold.

20. The method according to claim 18, wherein
an entering condition for the fifth measurement event is that a value obtained by adding a hysteresis value to the link measurement value between the serving L2 U2N relay UE and the network device is less than the ninth threshold, or the entering condition for the fifth measurement event is that a value obtained by subtracting the hysteresis value from a sum of a preset offset and the link measurement value between the candidate L2 U2N relay UE and the network device is greater than or equal to the tenth threshold; and/or,
a leaving condition for the fifth measurement event is that a value obtained by subtracting the hysteresis value from the link measurement value between the serving L2 U2N relay UE and the network device is less than the ninth threshold, or the leaving condition for the fifth measurement event is that a value obtained by subtracting the preset offset from a sum of the hysteresis value and the link measurement value between the candidate L2 U2N relay UE and the network device is less than the tenth threshold.

21. The method according to claim 19 or 20, further comprising:
reporting, by the remote UE, a fifth measurement result in a case where the entering condition for the fifth measurement event is fulfilled, wherein the fifth measurement result is used to determine whether to perform switching between the first relay link and the second relay link; and/or,
skipping, by the remote UE, measurement result reporting in a case where the leaving condition for the fifth measurement event is fulfilled.

22. The method according to claim 11, 14, 15, 16, 17, 19, 20, or 21, wherein
the preset offset is configured at at least one of:
a cell granularity, a remote UE granularity, a relay UE granularity, or a service priority granularity.

23. The method according to any one of claims 2 to 9 and 14 to 21, wherein
the remote UE obtains the link measurement value between the serving L2 U2N relay UE and the network device via at least one of the following signaling sent by the serving L2 U2N relay UE:
a discovery message, side control information (SCI), a sidelink medium access control control element (SL MAC CE), or a PC5-radio resource control (RRC) message.

24. The method according to any one of claims 10 to 21, wherein
the remote UE obtains the link measurement value between the candidate L2 U2N relay UE and the network device via at least one of the following signaling sent by the candidate L2 U2N relay UE:
a discovery message, SCI, an SL MAC CE, or a PC5-RRC message.

25. The method according to claim 3, 4, 5, 7, 8, 9, 11, 12, 13, 15, 16, 17, 19, 20, or 21, wherein the remote UE obtains the hysteresis value via RRC signaling sent by a network device, or the remote UE obtains the hysteresis value via a system broadcast message sent by the network device, or the remote UE obtains the hysteresis value via a discovery message sent by the serving L2 U2N relay UE, or the remote UE obtains the hysteresis value via a PC5- RRC message sent by the serving L2 U2N relay UE, or the remote UE obtains the hysteresis value via a system broadcast message forwarded by the serving L2 U2N relay UE.

26. The method according to claim 11, 14, 15, 16, 17, 19, 20, 21, or 22, wherein
the remote UE obtains the preset offset via RRC signaling sent by a network device, or the remote UE obtains the preset offset via a system broadcast message sent by the network device, or the remote UE obtains the preset offset via a discovery message sent by a serving L2 U2N relay UE, or the remote UE obtains the preset offset via a PC5-RRC message sent by the serving L2 U2N relay UE, or the remote UE obtains the preset offset via a system broadcast message forwarded by the serving L2 U2N relay UE.

27. A wireless communication method, comprising:
transmitting, by a communication device, first information, wherein the first information is used to configure at least one measurement event, wherein the at least one measurement event is for switching between a first relay link and a second relay link, and both the first relay link and the second relay link are for a remote user equipment (UE) to access a network through a relay UE.

28. The method according to claim 27, wherein
the at least one measurement event comprises a first measurement event;
in the first measurement event, a link measurement value between the remote UE and a serving layer-2 (L2) UE to network (U2N) relay UE is greater than or equal to a first threshold, and/or a link measurement value between the serving L2 U2N relay UE and a network device is greater than or equal to a second threshold.

29. The method according to claim 28, wherein
an entering condition for the first measurement event is that the link measurement value between the remote UE and the serving L2 U2N relay UE is greater than or equal to the first threshold, or the entering condition for the first measurement event is that a value obtained by subtracting a hysteresis value from the link measurement value between the remote UE and the serving L2 U2N relay UE is greater than or equal to the first threshold; and/or,
a leaving condition for the first measurement event is that the link measurement value between the remote UE and the serving L2 U2N relay UE is less than the first threshold, or the leaving condition for the first measurement event is that a value obtained by adding the hysteresis value to the link measurement value between the remote UE and the serving L2 U2N relay UE is less than the first threshold.

30. The method according to claim 28, wherein
an entering condition for the first measurement event is that the link measurement value between the serving L2 U2N relay UE and the network device is greater than or equal to the second threshold, or the entering condition for the first measurement event is that a value obtained by subtracting a hysteresis value from the link measurement value between the serving L2 U2N relay UE and the network device is greater than or equal to the second threshold; and/or,
a leaving condition for the first measurement event is that the link measurement value between the serving L2 U2N relay UE and the network device is less than the second threshold, or the leaving condition for the first measurement event is that a value obtained by adding the hysteresis value to the link measurement value between the serving L2 U2N relay UE and the network device is less than the second threshold.

31. The method according to claim 29 or 30, further comprising:
receiving, by the communication device, a first measurement result, wherein the first measurement result is sent by the remote UE in a case where the entering condition for the first measurement event is fulfilled, and wherein the first measurement result is used to determine whether to perform switching between the first relay link and the second relay link.

32. The method according to claim 27, wherein
the at least one measurement event comprises a second measurement event;
in the second measurement event, a link measurement value between the remote UE and a serving L2 U2N relay UE is less than a third threshold, and/or a link measurement value between the serving L2 U2N relay UE and a network device is less than a fourth threshold.

33. The method according to claim 32, wherein
an entering condition for the second measurement event is that the link measurement value between the remote UE and the serving L2 U2N relay UE is less than the third threshold, or the entering condition for the second measurement event is that a value obtained by adding a hysteresis value to the link measurement value between the remote UE and the serving L2 U2N relay UE is less than the third threshold; and/or,
a leaving condition for the second measurement event is that the link measurement value between the remote UE and the serving L2 U2N relay UE is greater than or equal to the third threshold, or the leaving condition for the first measurement event is that a value obtained by subtracting the hysteresis value from the link measurement value between the remote UE and the serving L2 U2N relay UE is greater than or equal to the third threshold.

34. The method according to claim 32, wherein
an entering condition for the second measurement event is that the link measurement value between the serving L2 U2N relay UE and the network device is less than the fourth threshold, or the entering condition for the second measurement event is that a value obtained by adding a hysteresis value to the link measurement value between the serving L2 U2N relay UE and the network device is less than the fourth threshold; and/or,
a leaving condition for the second measurement event is that the link measurement value between the serving L2 U2N relay UE and the network device is greater than or equal to the fourth threshold, or the leaving condition for the second measurement event is that a value obtained by subtracting the hysteresis value from the link measurement value between the serving L2 U2N relay UE and the network device is larger than or equal to the fourth threshold.

35. The method according to claim 33 or 34, further comprising:
receiving, by the communication device, a second measurement result, wherein the second measurement result is sent by the remote UE in a case where the entering condition for the second measurement event is fulfilled, and wherein the second measurement result is used to determine whether to perform switching between the first relay link and the second relay link.

36. The method according to claim 27, wherein
the at least one measurement event comprises a third measurement event;
in the third measurement event, a link measurement value between the remote UE and a candidate L2 U2N relay UE is greater than or equal to a fifth threshold, and/or a link measurement value between the candidate L2 U2N relay UE and a network device is greater than or equal to a sixth threshold.

37. The method according to claim 36, wherein
an entering condition for the third measurement event is that a value obtained by adding a preset offset to the link measurement value between the remote UE and the candidate L2 U2N relay UE is greater than or equal to the fifth threshold, or the entering condition for the third measurement event is that a value obtained by subtracting a hysteresis value from a sum of the preset offset and the link measurement value between the remote UE and the candidate L2 U2N relay UE is greater than or equal to the fifth threshold; and/or,
a leaving condition for the third measurement event is that the value obtained by adding the preset offset to the link measurement value between the remote UE and the candidate L2 U2N relay UE is less than the fifth threshold, or the leaving condition for the third measurement event is that the value obtained by adding the hysteresis value and the preset offset to the link measurement value between the remote UE and the candidate L2 U2N relay UE is less than the fifth threshold.

38. The method according to claim 36, wherein
an entering condition for the third measurement event is that the link measurement value between the candidate L2 U2N relay UE and the network device is greater than or equal to the sixth threshold, or the entering condition for the third measurement event is that a value obtained by subtracting a hysteresis value from the link measurement value between the candidate L2 U2N relay UE and the network device is greater than or equal to the sixth threshold; and/or,
a leaving condition for the third measurement event is that the link measurement value between the candidate L2 U2N relay UE and the network device is less than the sixth threshold, or the leaving condition for the third measurement event is that a value obtained by adding the hysteresis value to the link measurement value between the candidate L2 U2N relay UE and the network device is less than the sixth threshold.

39. The method according to claim 37 or 38, further comprising:
receiving, by the communication device, a third measurement result, wherein the third measurement result is sent by the remote UE in a case where the entering condition for the third measurement event is fulfilled, and wherein the third measurement result is used to determine whether to perform switching between the first relay link and the second relay link.

40. The method according to claim 27, wherein
the at least one measurement event comprises a fourth measurement event;
in the fourth measurement event, a sidelink measurement value measured for a candidate L2 U2N relay UE is higher than a sidelink measurement value measured for a serving L2 U2N relay UE by a preset offset, and/or a link measurement value between the candidate L2 U2N relay UE and a network device is higher than a link measurement value between the serving L2 U2N relay UE and the network device by the preset offset.

41. The method according to claim 40, wherein
an entering condition for the fourth measurement event is that a value obtained by adding the preset offset to the sidelink measurement value measured for the candidate L2 U2N relay UE is greater than or equal to a value obtained by adding the preset offset and an offset corresponding to a current measurement object to the sidelink measurement value measured for the serving L2 U2N relay UE, or the entering condition for the fourth measurement event is that a value obtained by subtracting a hysteresis value from a sum of the preset offset and the sidelink measurement value measured for the candidate L2 U2N relay UE is greater than or equal to the value obtained by adding the preset offset and the offset corresponding to the current measurement object to the sidelink measurement value measured for the serving L2 U2N relay UE; and/or,
a leaving condition for the fourth measurement event is that the value obtained by adding the preset offset to the sidelink measurement value measured for the candidate L2 U2N relay UE is less than the value obtained by adding the preset offset and the offset corresponding to the current measurement object to the sidelink measurement value measured for the serving L2 U2N relay UE, or the leaving condition for the fourth measurement event is that a value obtained by adding the preset offset and the hysteresis value to the sidelink measurement value measured for the candidate L2 U2N relay UE is less than the value obtained by adding the preset offset and the offset corresponding to the current measurement object to the sidelink measurement value measured for the serving L2 U2N relay UE.

42. The method according to claim 40, wherein
an entering condition for the fourth measurement event is that a value obtained by adding the preset offset to the link measurement value between the candidate L2 U2N relay UE and the network device is greater than or equal to a value obtained by adding the preset offset and an offset corresponding to a current measurement object to the link measurement value between the serving L2 U2N relay UE and the network device, or the entering condition for the fourth measurement event is that a value obtained by subtracting a hysteresis value from a sum of the preset offset and the link measurement value between the candidate L2 U2N relay UE and the network device is greater than or equal to the value obtained by adding the preset offset and the offset corresponding to the current measurement object to the link measurement value between the serving L2 U2N relay UE and the network device; and/or,
a leaving condition for the fourth measurement event is that the value obtained by adding the preset offset to the link measurement value between the candidate L2 U2N relay UE and the network device is less than the value obtained by adding the preset offset and the offset corresponding to the current measurement object to the link measurement value between the serving L2 U2N relay UE and the network device, or the leaving condition for the fourth measurement event is that a value obtained by adding the preset offset and the hysteresis value to the link measurement value between the candidate L2 U2N relay UE and the network device is less than the value obtained by adding the preset offset and the offset corresponding to the current measurement object to the link measurement value between the serving L2 U2N relay UE and the network device.

43. The method according to claim 41 or 42, further comprising
receiving, by the communication device, a fourth measurement result, wherein the fourth measurement result is sent by the remote UE in a case where the entering condition for the fourth measurement event is fulfilled, and wherein the fourth measurement result is used to determine whether to perform switching between the first relay link and the second relay link.

44. The method according to claim 27, wherein
the at least one measurement event comprises a fifth measurement event;
in the fifth measurement event, a link measurement value between the remote UE and a serving L2 U2N relay UE is less than a seventh threshold and a link measurement value between the remote UE and a candidate L2 U2N relay UE is greater than or equal to an eighth threshold, and/or, a link measurement value between the serving L2 U2N relay UE and a network device is less than a ninth threshold and a link measurement value between the candidate L2 U2N relay UE and the network device is greater than or equal to a tenth threshold.

45. The method according to claim 44, wherein
an entering condition for the fifth measurement event is that the link measurement value between the remote UE and the serving L2 U2N relay UE is less than the seventh threshold, or the entering condition for the fifth measurement event is that a value obtained by adding a hysteresis value to the link measurement value between the remote UE and the serving L2 U2N relay UE is less than the seventh threshold, or the entering condition for the fifth measurement event is that a value obtained by adding a preset offset to the link measurement value between the remote UE and the candidate L2 U2N relay UE is greater than or equal to the eighth threshold, or the entering condition for the fifth measurement event is that a value obtained by subtracting the hysteresis value from a sum of the preset offset and the link measurement value between the remote UE and the candidate L2 U2N relay UE is greater than or equal to the eighth threshold; and/or,
a leaving condition for the fifth measurement event is that the link measurement value between the remote UE and the serving L2 U2N relay UE is greater than or equal to the seventh threshold, or, the leaving condition for the fifth measurement event is that a value obtained by subtracting the hysteresis value from the link measurement value between the remote UE and the serving L2 U2N relay UE is greater than or equal to the seventh threshold, or, the leaving condition for the fifth measurement event is that the value obtained by adding the preset offset to the link measurement value between the remote UE and the candidate L2 U2N relay UE is less than the eighth threshold, or, the leaving condition for the fifth measurement event is that a value obtained by adding the preset offset and the hysteresis value to the link measurement value between the remote UE and the candidate L2 U2N relay UE is less than the eighth threshold.

46. The method according to claim 44, wherein
an entering condition for the fifth measurement event is that a value obtained by adding a hysteresis value to the link measurement value between the serving L2 U2N relay UE and the network device is less than the ninth threshold, or the entering condition for the fifth measurement event is that a value obtained by subtracting the hysteresis value from a sum of a preset offset and the link measurement value between the candidate L2 U2N relay UE and the network device is greater than or equal to the tenth threshold; and/or,
a leaving condition for the fifth measurement event is that a value obtained by subtracting the hysteresis value from the link measurement value between the serving L2 U2N relay UE and the network device is less than the ninth threshold, or the leaving condition for the fifth measurement event is that a value obtained by subtracting the preset offset from a sum of the hysteresis value and the link measurement value between the candidate L2 U2N relay UE and the network device is less than the tenth threshold.

47. The method according to claim 45 or 46, further comprising:
receiving, by the communication device, a fifth measurement result, wherein the fifth measurement result is sent by the remote UE in a case where the entering condition for the fifth measurement event is fulfilled, and wherein the fifth measurement result is used to determine whether to perform switching between the first relay link and the second relay link.

48. The method according to claim 37, 40, 41, 42, 43, 45, 46, or 47, wherein
the preset offset is configured at at least one of:
a cell granularity, a remote UE granularity, a relay UE granularity, or a service priority granularity.

49. The method according to any one of claims 28 to 35 and 40 to 47, wherein
in a case where the communication device is the serving L2 U2N relay UE, the serving L2 U2N relay UE carries the link measurement value between the serving L2 U2N relay UE and the network device via at least one of:
a discovery message, side control information (SCI), a sidelink medium access control control element (SL MAC CE), or a PC5-radio resource control (RRC) message.

50. The method according to claim 29, 30, 31, 33, 34, 35, 37, 38, 39, 41, 42, 43, 45, 46, or 47, wherein
in a case where the communication device is a network device, the network device configures the hysteresis value via RRC signaling or via a system broadcast message; or
in a case where the communication device is the serving L2 U2N relay UE, the serving L2 U2N relay UE configures the hysteresis value via a discovery message, or via a PC5- RRC message, or via a system broadcast message forwarded.

51. The method according to claim 37, 40, 41, 42, 43, 45, 46, 47, 48, wherein
in a case where the communication device is the network device, the network device configures the preset offset via RRC signaling or via a system broadcast message, or
in a case where the communication device is the serving L2 U2N relay UE, the serving L2 U2N relay UE configures the preset offset via a discovery message, or via a PC5-RRC message, or via a system broadcast message forwarded.

52. The method according to any one of claims 27 to 51, wherein
the communication device is a network device or a serving L2 U2N relay UE.

53. A remote user equipment (UE), comprising:
a first communication unit configured to receive first information, wherein
the first information is used to configure at least one measurement event, wherein the at least one measurement event is for switching between a first relay link and a second relay link, and both the first relay link and the second relay link are for a remote UE to access a network through a relay UE.

54. A communication device, comprising:
a first communication unit configured to send first information, wherein
the first information is used to configure at least one measurement event, wherein the at least one measurement event is for switching between a first relay link and a second relay link, and both the first relay link and the second relay link are for a remote user equipment (UE) to access a network through a relay UE.

55. A remote user equipment (UE), comprising: a processor and a memory, wherein the memory is configured to store a computer program, and the processor is configured to invoke and run the computer program stored in the memory, to enable the remote UE to execute the method according to any one of claims 1 to 26.

56. A communication device, comprising: a processor and a memory, wherein the memory is configured to store a computer program, and the processor is configured to invoke and run the computer program stored in the memory, to enable the communication device to execute the method according to any one of claims 27 to 52.

57. A chip, comprising: a processor configured to invoke and run a computer program in a memory, to enable a device equipped with the chip to execute the method according to any one of claims 1 to 26.

58. A chip, comprising: a processor configured to invoke and run a computer program in a memory, to enable a device equipped with the chip to execute the method according to any one of claims 27 to 52.

59. A computer-readable storage medium configured to store a computer program, wherein when the computer program is executed, the method according to any one of claims 1 to 26 is implemented.

60. A computer-readable storage medium configured to store a computer program, wherein when the computer program is executed, the method according to any one of claims 27 to 52 is implemented.

61. A computer program product comprising computer program instructions, wherein when the computer program instructions are executed, the method according to any one of claims 1 to 26 is implemented.

62. A computer program product comprising computer program instructions, wherein when the computer program instructions are executed, the method according to any one of claims 27 to 52 is implemented.

63. A computer program, wherein when the computer program is executed, the method according to any one of claims 1 to 26 is implemented.

64. A computer program, wherein when the computer program is executed, the method according to any one of claims 27 to 52 is implemented.
